Europäisches Patentamt

European Patent Office

Office européen des brevets

(19)

(11) **EP 0 527 567 B1**

(12) **EUROPEAN PATENT SPECIFICATION**

(45) Date of publication and mention
of the grant of the patent:
**01.10.1997 Bulletin 1997/40**

(51) Int Cl.$^6$: **G05B 13/02**, G05B 15/02,
G06F 15/00, A47L 9/28,
A47L 9/00

(21) Application number: **92306772.2**

(22) Date of filing: **23.07.1992**

(54) **A method of controlling a controlled object, and a control system for such a method**

Methode zur Regelung eines zu regelnden Objektes und Regelungssystem für diese Methode

Procédé pour commander un objet à commander et système de commande pour un tel procédé

(84) Designated Contracting States:
**DE GB**

(30) Priority: **01.08.1991 JP 192868/91**
**30.08.1991 JP 219603/91**

(43) Date of publication of application:
**17.02.1993 Bulletin 1993/07**

(73) Proprietor: **HITACHI, LTD.**
**Chiyoda-ku, Tokyo 101 (JP)**

(72) Inventors:
• **Koharagi, Haruo**
**Taga-gun, Ibaraki 316 (JP)**
• **Thara, Kazuo**
**Hitachi-shi, Ibaraki 316 (JP)**
• **Ishii, Yoshitarou**
**Hitachi-shi, Ibaraki 316 (JP)**
• **Suka, Hisao**
**Hitachi-shi, Ibaraki 316 (JP)**
• **Kawamata, Mitsuhisa**
**Hitachi-shi, Ibaraki 316 (JP)**
• **Azima, Toshiyuki**
**Hitachi-shi, Ibaraki 316 (JP)**

(74) Representative: **Calderbank, Thomas Roger et al**
**MEWBURN ELLIS**
**York House**
**23 Kingsway**
**London WC2B 6HP (GB)**

(56) References cited:
EP-A- 0 264 728          EP-A- 0 312 111
EP-A- 0 397 205          US-A- 4 654 924
US-A- 4 966 188

• PATENT ABSTRACTS OF JAPAN, unexamined
applications, P field, vol. 15, no. 16, January 14,
1991 THE PATENT OFFICE JAPANESE
GOVERNMENT page 114 P 1152; & JP-A-02 260
002
• PATENT ABSTRACTS OF JAPAN, unexamined
applications, C field, vol. 16, no. 473, October 2,
1992 THE PATENT OFFICE JAPANESE
GOVERNMENT page 33 C 991; & JP-A-04 170 927
• PATENT ABSTRACTS OF JAPAN, unexamined
applications, P field, vol. 15, no. 71, February 19,
1991 THE PATENT OFFICE JAPANESE
GOVERNMENT page 25 P 1168; & JP-A-02 292
602
• IMS '91--Learning in IMS, Presented at the First
Workshop of the Intelligent System Seminars on
Learning in IMS, Hungary, March 6-8, 1991,
Computers in Industry 17 (1991) Elsevier
Publishers B.V., D. Barschdorff and L.
Monostori: "Neural networks---Their application
and perspectives in intelligent machining",
pages 101-119

# EP 0 527 567 B1

## Description

The present invention relates to a method of controlling a controlled object. It is particularly, but not exclusively, applicable to the control of a domestic electric appliance, such as a vacuum cleaner or washing machine. The present invention also relates to a control system for such a method.

In recent years, methods of controlling a controlled object using fuzzy logic have been developed. Such methods are normally used for situations where the controlled object is complex, and hence a very large amount of data has to be analysed. Thus, many different characteristics are derived relating to the operation of the controlled object, from many different sensors. The fuzzy logic system then analyses those characteristics to derive appropriate control signals. However, such known fuzzy logic systems are extremely complicated, and are thus not appropriate for domestic electric appliances.

On the other hand, known systems for controlling vacuum cleaners are primitive. They depend on the user operating control to select an appropriate operation in dependence on the surface to be cleaned. Therefore, when the user moves about the house, the operation of the vacuum cleaner must be changed as the floor surface changes, e.g. from carpet to a hard surface.

JP-A-64-52430 has proposed that the type of surface be detected on the basis of signals derived from a brush motor for driving a brush in the nozzle of a vacuum cleaner. However, this proposal had the disadvantage that the control method was affected by the force applied by the user, which tended to change with the type of floor surface. Therefore, the control method was not satisfactory.

EP-A-0397205, EP-A-0264728 and US-A-4966188 are each concerned with controlling an object using fuzzy logic. In each case, a sensor is used to detect a property of the controlled object and the output of the sensor is fed to the fuzzy logic. EP-A-0397205 and EP-A-0264728 both relate to the control for a fan of a vacuum cleaner, and US-A-4966188 relates to a pneumatically operated gas-pressure controller.

JP-A-01-26002 discloses a controller for controlling an object by fuzzy logic which uses data in a time series as the input to a neural network, with the output of the neural network being fed to the fuzzy logic.

Control using neural network but not fuzzy logic is discussed in an article by D. Barschdorff et al entitled "Neural networks - Their applications and perspectives in intelligent machining", published in Computers in Industry 17 (1991) Elsevier Publishers, pages 101 to 119. It is proposed that the outputs of a plurality of sensors form input to the neural network.

According to a first aspect of the present invention there is provided a method of controlling a controlled object, comprising generating a plurality of control characteristics, processing the control characteristics using a neural network and fuzzy logic to derive a control signal, and controlling the controlled object on the basis of the control signal; wherein:

the controlled object is subject to a load; and
the plurality of control characteristics correspond to the type of load and are derived by sampling the form of the output from a single sensor, which sensor senses a single property; and
the neural network derives at least one basic control pattern from the control characteristics, and the fuzzy logic derives the control signal from that basic control pattern.

According to a second aspect of the present invention there is provided a control system for controlling a controlled object, comprising means for generating a plurality of control characteristics, and a neural network and fuzzy logic system for processing the control characteristics to derive a control signal for controlling the controlled object; - wherein:

the controlled object is subject to a load;
the plurality of control characteristics correspond to the type of load;
a single sensor, for sensing a single property of the controlled object, is provided;
and the means for generating the control characteristics is arranged to generate these characteristics by sampling the form of the output of the single sensor, the neural network is arranged to derive at least one basic control pattern from the control characteristics, and the fuzzy logic is arranged to derive the control signal from that basic control pattern.

Thus a plurality of control characteristics are derived from a single sensor, and therefore the control apparatus needed to provide suitable inputs to the neural network and fuzzy logic may be simplified.

For example, where the sensor is a pressure sensor, it is possible to derive the average pressure, and then investigate the changes from that average, i.e. by determining the items for which the pressure is above or below the average, etc. Similar considerations can be applied to signals derived from motor load current.

EP 0 527 567 B1

The fuzzy logic may operate solely on the basis of the characteristics supplied to the neural network, but preferably receives other characteristics which may be derived from the same or different sensors.

On disadvantage of control on the basis of a neural network and fizzy logic is the time needed for that neural network to process the signals may be large, because the inputs to the neural network are large. Existing applications of neural networks have normally been concerned with maintaining uniform operation, whilst the basis of the present invention depends on changing the operation of the controlled object. Therefore, it may be possible to detect if one of the characteristics has a predetermined value (which term includes a predetermined range) and generating a fixed control pattern for the controlled object when that predetermined value is met. Of course, the fuzzy logic may modify that fixed control pattern, but the neural network is bypassed. In this case, where the decision to be made is wholly clear, then the neural network can by bypassed. This represents another, independent, aspect of the present invention. As described above, the fuzzy logic acts as a modifier of the neural network. However, it is also possible to apply fuzzy logic to all the control characteristics prior to input to the neural network.

As was mentioned above, the present invention relates to a control method, and to a control system for carrying out such a method. It is particularly, but not exclusively, applicable to control of a domestic electric appliance such as a vacuum cleaner or washing machine.

Embodiments of the present invention will now be described in detail, by way of example, with reference to the accompanying drawings, in which:

Fig. 1 is a general schematic view of a control system according to the present invention;
Fig. 2 is a block diagram of a vacuum cleaner control system according to an embodiment of the present invention;
Fig. 3 illustrates structural features of the vacuum cleaner control circuit of Fig. 2;
Fig. 4 is a view, partially in section, of a vacuum cleaner to which the present invention may be applied;
Fig. 5 is a view of the nozzle of the vacuum cleaner of Fig. 4;
Fig. 6(a to 6c) illustrate pressure variations in the vacuum cleaner of Fig. 4, for different surfaces;
Fig. 7a to 7c illustrate variations in characteristics for different surfaces;
Fig. 8 is a schematic diagram illustrating the operation of a neural network;
Fig. 9 illustrates the principles of operation of fuzzy logic;
Fig. 10 illustrates fuzzy rules which may be used in a vacuum cleaner embodying the present invention;
Fig. 11a to 11c illustrates variations in membership functions which may be used in fuzzy logic;
Fig. 12 is a schematic diagram illustrating the processing of characteristics within an embodiment of the present invention;
Fig. 13 is a circuit diagram of a zero-cross detecting circuit used in the embodiment of Fig. 2;
Fig. 14a to 14d illustrates voltage and current waveforms occurring in the embodiment of Fig. 2;
Fig. 15 shows graphs illustrating the result of operating a vacuum cleaner according to the embodiment of Fig. 2;
Fig. 16a to 16d illustrates further variations in control characteristics for different surfaces;
Fig. 17 shows processing of characteristics being a modification of Fig. 12;
Fig. 18 is a graph illustrating the application of threshold values;
Fig. 19 shows processing similar to Fig. 17 incorporating threshold measurements;
Fig. 20 shows another embodiment, being a modification of Fig. 1, in which separate sensors are used for providing inputs to the neural network and fuzzy logic system respectively;
Fig. 21 is a block diagram illustrating schematically the operation of the arrangement of Fig. 20;
Fig. 22 shows circuit elements for forming the control system of Figs. 20 and 21;
Fig. 23a and 23b show respectively the configuration of a brush power detecting circuit and the variations of voltage therein;
Figs. 24a to 24c illustrate the variations in power brush motor current
Fig. 25a to 25c illustrate the effect of filtering the currents of Fig. 249(a to c);
Fig. 26a to 26d illustrate variations in characteristics for different surfaces, for the embodiment of Fig. 20;
Figs. 27a and 27b illustrate further variations in control characteristics;
Fig. 28 illustrates processing in the embodiment of Fig. 20;
Fig. 29 illustrates the effect of operation of the embodiment of Fig. 20, when applied to a vacuum cleaner;
Fig. 30 shows a modification of the embodiment of Fig. 20, in which the characteristics applied to the neural network can be switched between different sensors;
Fig. 31 is a block diagram illustrating the operation of Fig. 30;
Fig. 32 shows processing in the arrangement of Fig. 30;
Fig. 33 illustrates the operation of the embodiment of Fig. 30;
Fig. 34 illustrates the processing in another embodiment of the present invention;
Fig. 35 illustrates processing in another embodiment of the present invention, in which fuzzy logic is applied to each characteristic;

3

Fig. 36 illustrates an embodiment in which the present invention is applied to a washing machine; and
Fig. 37 illustrates processing in the embodiment of Fig. 36.

A first embodiment of this invention which relates to a vacuum cleaner. The vacuum cleaner of the present embodiment has a variable speed motor for the fan motor, which also serves as the vacuum cleaner drive source. Examples of such variable speed motors include an AC rectifier motor whose speed is changed by controlling the input, a phase control motor, an inverter driven induction motor, a reluctance motor and a brushless motor. The present embodiment describes the case where the fan motor is an AC rectifier motor being a brushless motor. This provides longer service lift and excellent control response characteristics.

The present embodiment may use a suction nozzle having a nozzle motor which drives a rotary brush (hereinafter referred to as a powered brush suction nozzle) or the suction nozzle without such a brush (referred to as a general suction port). The nozzle motor may be a DC magnet motor or an AC rectifier motor, and the present embodiment describes the case wheren an AC magnet motor incorporating a rectifier circuit is used. The following also explains the case of using a pressure sensor (semiconductor sensor) inside the cleaner for detection of filter-clogging.

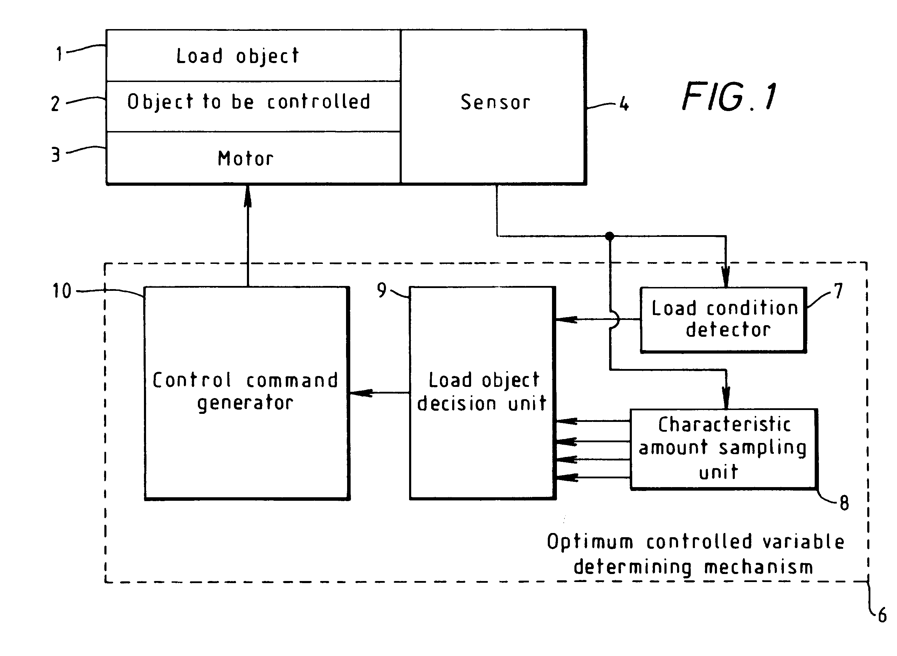

Fig. 1 shows schematically a control system which may be used in the first embodiment being a vacuum cleaner according to the present invention, or may be used in e.g. a washing machine. Fig. 1 shows a load object 1 (being a floor surface to be cleaned for a vacuum cleaner, and the amount and quality of the cloth for a washing machine), a controlled object 2 (being a fan for a vacuum cleaner, and a pulsator for a washing machine) a motor 3 , a sensor 4 (being a floor surface detecting sensor for a vacuum cleaner and a detecting sensor for the amount, quality and contamination of the cloth for a washing machine), and an optimum controlled variable determining mechanism 6. The optimum controlled variable determining mechanism has a loaded condition detector 7, a characteristic amount sampling unit 8 which is connected to the sensor 4, a load object decision unit 9 which evaluates the load object from the outputs of the load condition detector 7 and the characteristic amount sampling unit 8, and a control instruction generator 10 which generates a control instruction generator 10 which generates a control instruction (control signal) based on the output from the load object decision unit 8. The motor 3 is then controlled according to the control instruction such that optimum operating conditions will be obtained. Thus, a household appliance embodying the present invention can be automated so that optimum operation can be made according to the desires of the operator.

From the load object:

(1) the current operating condition is detected from the output signal of the load condition detector 7;
(2) more than one characteristic amount corresponding to the type of load is generated by the characteristic amount sampling unit
(3) neural and fuzzy calculations are carried out by the load object decision unit 9, using outputs from the loaded condition detector 7 and characteristic amount sampling unit 8 as inputs,
(4) an overall decision of the type of load is made,
(5) the control object 3 is controlled by the motor 2 based on that result.

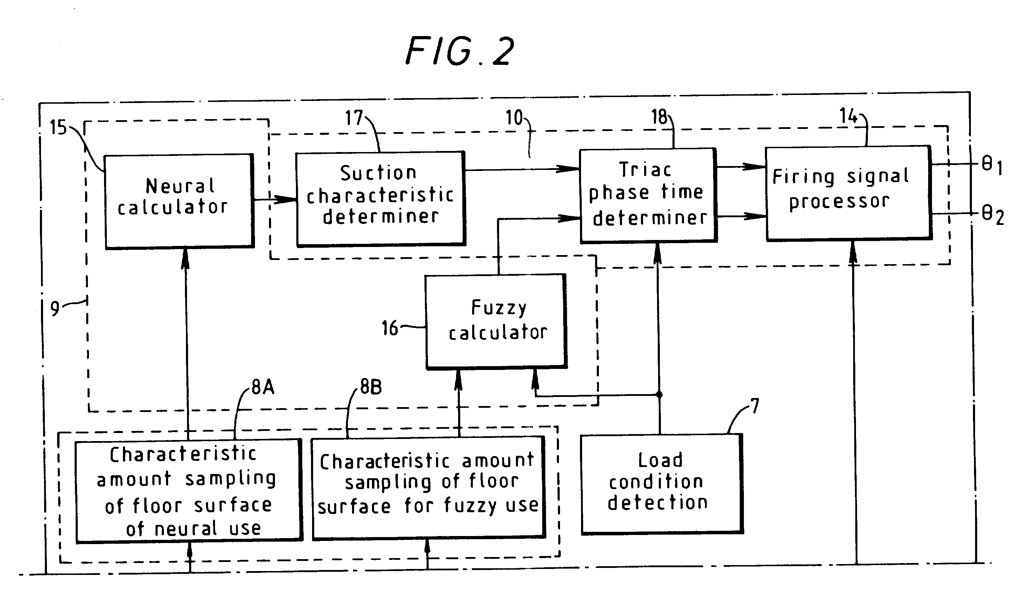

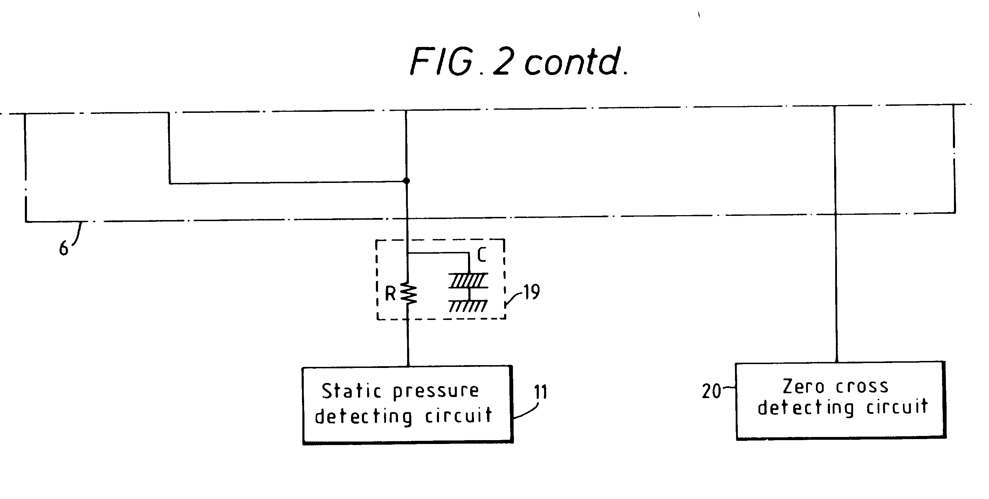

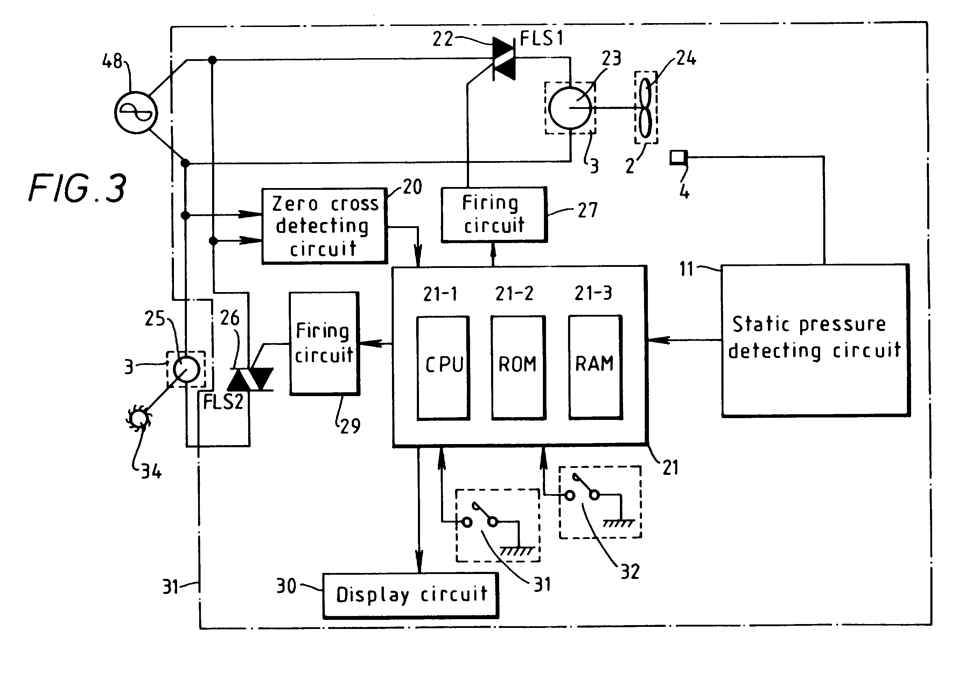

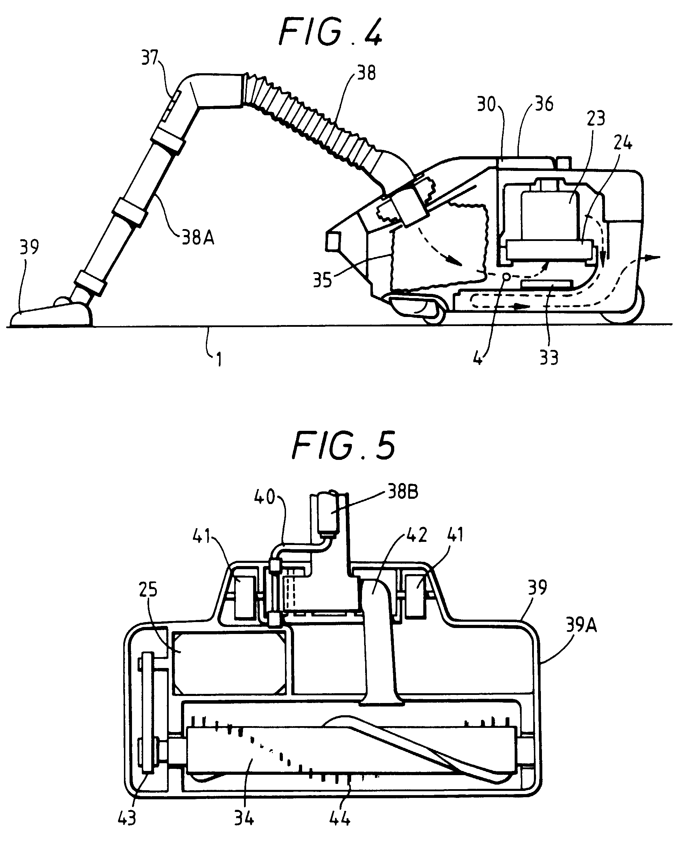

The embodiment referred to above will now be described in more detail with reference to Figs. 2 to 4. Fig.2 is a block diagram representing the general configuration of the vacuum cleaner control system, Fig. 3 represents the configuration of the vacuum cleaner control circuit, and Fig.4 shows the general structure of the vacuum cleaner. In Figs. 2 to 4 parts which correspond to parts of Fig. 1 are indicated by the same reference numerals.

In Fig.2 to Fig.4, the control object 2 comprises fan 24, the motor 3 comprising a fan motor 23 and a powered brush motor 25, the sensor 4 is a pressure sensor (is a semiconductor pressure sensor) to detect the clogging of a filter 33. The characteristic amount sampling unit 8 has two parts 8A and 8B, the former being sampling of floor surface for neural use and the latter being sampling of floor surface for fuzzy use. The load object decision unit 9 comprises neural calculator (neural network) 15 and fuzzy calculator (fuzzy logic system) 17 and the control command generator 10 comprises suction characteristic determinater 13, a triac phase time determiner 18, and a firing signal processor 16. A static detecting circuit 11 converts the output from the pressure sensor 4 into a static pressure, and generates an output to a low-pass filter 11 comprising a resistor R and capacitor C to remove the noise component from the output signal of the static detecting circuit 11. A zero cross detecting circuit 20 detects the zero crossing of the AC power supply 48 (see Fig. 3). A microcomputer 21 which controls the device comprises a central processing unit (CPU) 21-1, read-only memory (ROM) 21-2 and random access memory (RAM) 21-3 interconnected by an address bus and control bus (not shown). A progress corresponding to the optimum controlled variable determining mechanism 6 is stored in the microcomputer 21. The ROM 21-2 stores the programs required to drive the fan motor 23, including a load condition detecting program, a characteristic amount sampling program, neural calculation program a fuzzy calculation program, suction characteristic determination program, triac phase time determination program, firing signal generation program 16 and zero cross detection program 7. The RAM 21-3 is used to read and write a variety of data required to store the programs stored into the said ROM 21-2.

A triac FLS1 22 adjusts the voltage applied to the fan motor 23, and triac 26 FLS2 adjusts the voltage applied to the powered brush motor 25 to drive the rotary brush 34 housed inside the suction nozzle 39 (see Figs. 4 and 5), each being driven by firing circuits 27 and 29. A display circuit 30 indicates the operating conditions of the cleaner. An operation switch 32 is provided at the master control unit 37, and a powered brush switch 31 determines whether the rotary brush 34 is to be operated or not (the powered brush suction nozzle is selected by turning on the powered brush switch 31, and the general suction nozzle is selected by turning it off).

The cleaner control circuit 33 has a configuration described above.

In such a system, the cleaner also includes a cleaner body 36, a powered ventilator which further comprises the display circuit 30, fan motor 23 and fan 24, pressure sensor 4, cleaner control circuit 33 and filter 35, hose 38, hose extension tube 38A and suction nozzle 39.

Fig.5 shows the internal structure of the powered brush suction nozzle 39. It shows that, the powered brush motor 25, rotary brush 34 with bristles 44 attached thereto are installed inside the suction case 36A of the powered brush suction port 39A. A timing belt 43 transmits the driving force of the powered brush motor 25 to the rotary brush 34. Also shown are rollers 41. The power lead wire 40 of the powered brush motor 25 is connected to the power line 38B provided inside the extension tube 38.

When the powered brush motor 25 is supplied with power and rotates, the rotary brush 34 is rotated by timing belt 43. If the powered brush suction nozzle 39 contacts the floor surface 1 during the rotation of the rotary brush 34, the bristles 44 contact the floor surface 1, improving the cleaning efficiency.

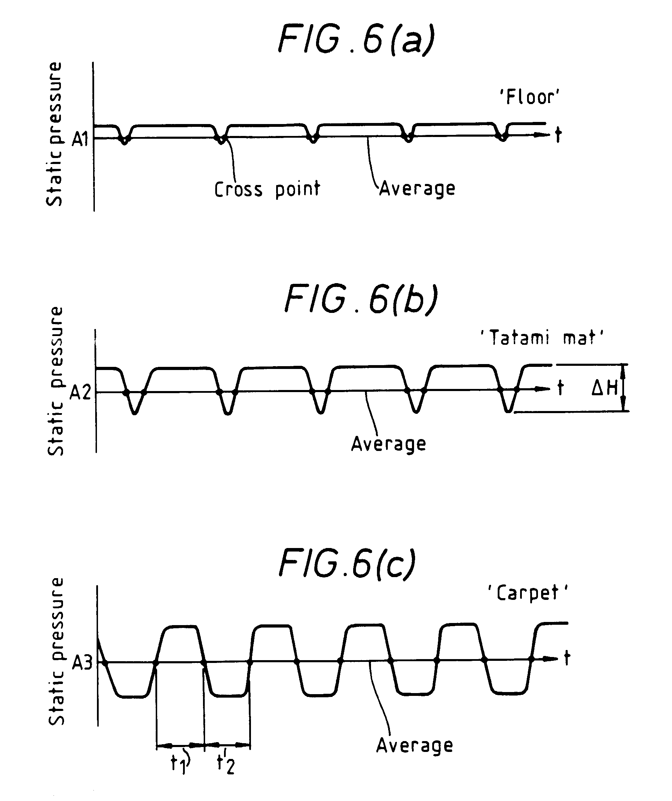

If the user operates the suction nozzle 39 on the floor surface 1 during operation of the fan motor 23, the output signal of the low-pass filter 13 fluctuates as shown in Figs. 6(a) to Fig. 6(b) shows a typical example of the output signal of the low-pass filter 13 when the suction nozzle 39 is operated on a hard surface (hereinafter "floor") corresponding surface 1, Fig. 6(b) shows an example when the nozzle 39 is operated on a mat (hereinafter "tatami mat") and Fig. 6(c) shows an example when the nozzle 39 is operated on a rug or carpet (hereinafter "carpet"). It has been found that the output signal from the low-pass filter 13 differs according to the type of floor surface 1, and can thus be used to derive a plurality of characteristics from the output signal in accordance with the type of floor surface 1.

For example, the average of data obtained within a certain sampling time has been investigated. When the surface 1 is hard, corresponding to "floor" and Fig. 6(a), the average suciton force A1 is small and the change in suction force at the time of reversal of direction of the suction nozzle 79 during cleaning is also small. When the surface is softer, corresponding to "tatami mat" and Fig. 6(b) the average force A2 is larger, and the change in force on reversal of motion is larger. For a softer surface, corresponding to "carpet" and Fig. 6(c), the average force A3 is very large and the change in force is large. The number of times the signal obtained crosses the average value is obtained as the number of crosses CR. The time the signal is over the average is considered as time $t_1$, the time it is below the average is time $t_2$, $(t_1 - t_2)$ is then derived as an operating time difference TD, $(t_1/(t_1 + t_2))$ is derived as an operating time ratio TR, and the deviation between the maximum and minimum values of static pressure is derived as the static variation width $\gamma H$. Thus, from the one signal, from one sensor, a plurality of characteristics are derived.

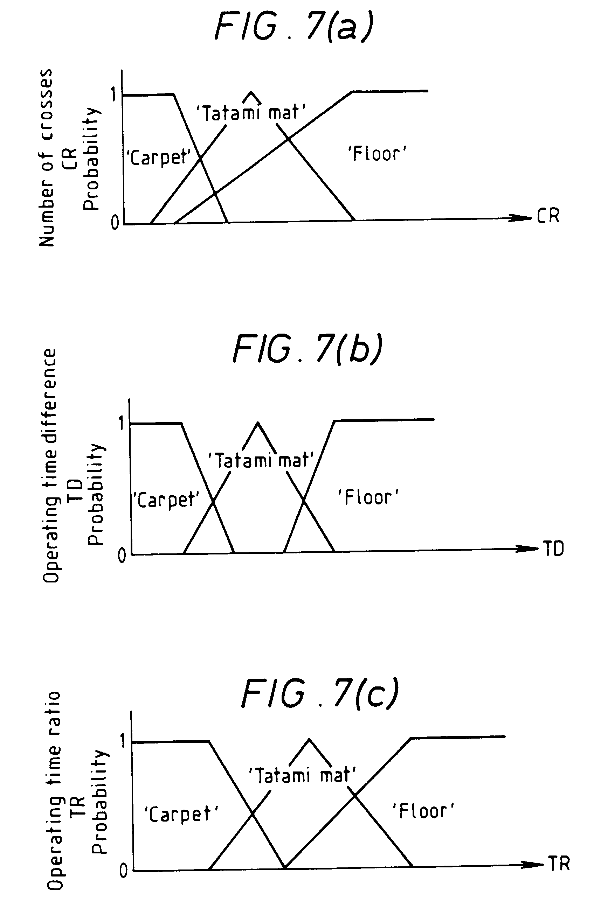

Figs. 7(a) to 7(c) illustrate variations in the number of crosses CR the operating time difference TD, and the operating time ratio TR for different types of floor surface 1. Fig. 7(a) shows the variation on number of crosses CR, for different floor surfaces, Fig. 7 (b) shows the variation in the operating time difference TD and Fig. 7 (c) shows the variation in the between operating time ratio TR.

If an attempt were made to identify the type of floor surface 1 from the one characteristic corresponding to one of Figs. 7(a) to 7(c) the decision is difficult because more than one floor surface 1 may have the same value of the characteristic. However, when the characteristic corresponding to each type of floor surface is compared, it is possible to evaluate the type of floor surface 1 by using more than one characteristic corresponding to the floor surface because the corresponding position of floor surface 1 with respect to the output level is different.

As described above, it has been found that, when the user operates the suction nozzle 39 back and forth on a floor surface 1, a variation corresponding to the floor surface 1 is superimposed onto the output signal from the low-pass filter which receives the output of the pressure sensor. This is sampled, to derive more than one characteristic by the characteristic amount sampling unit 8, thereby permitting neural and fuzzy calculations to be made. Then the system provides overall decision of the type of floor surface to be cleaned, and controls the motor according to that decision. In this manner, it is possible to provide a vacuum cleaner which generates the optimum suction force for different surfaces.

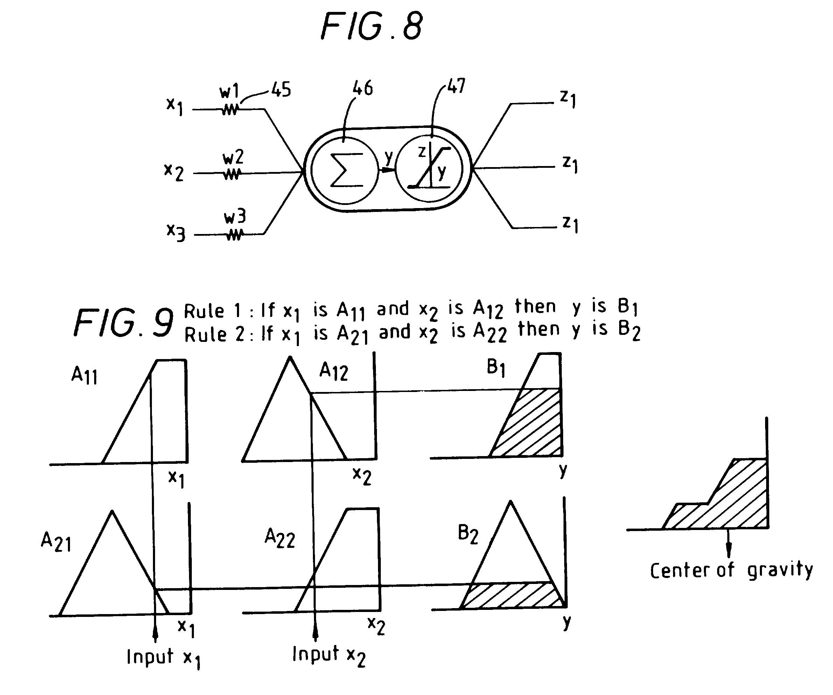

The load object decision unit 9 will now be described. A neural network is used for evaluating the cleaned floor surface, using more than one characteristic amount corresponding to the cleaned floor surface. Fig. 8 shows the unit configuration of the neural network in neural calculator 15. Inputs $\chi_1$ to $\chi_3$ (corresponding to the characteristic corresponding to the floor surface) are multiplied by weight coefficients $\omega_1$ to $\omega_3$ 45, and the result are combined (the sums of the results of the multiplication is said to be the product sum 46). The product sum 46 is converted by a Sigmoid function 47 into an output signal $z_i$. This is then output from the neural network. The output y of product sum 46 and the output z of Sigmoid function 47 can be obtained from equations 1 and 2 below:

$$y = \Sigma \, w_i \, \chi_i \qquad\qquad \text{(Equation 1)}$$

$$z = \frac{1}{1+\exp(-y)} \qquad\qquad \text{(Equation 2)}$$

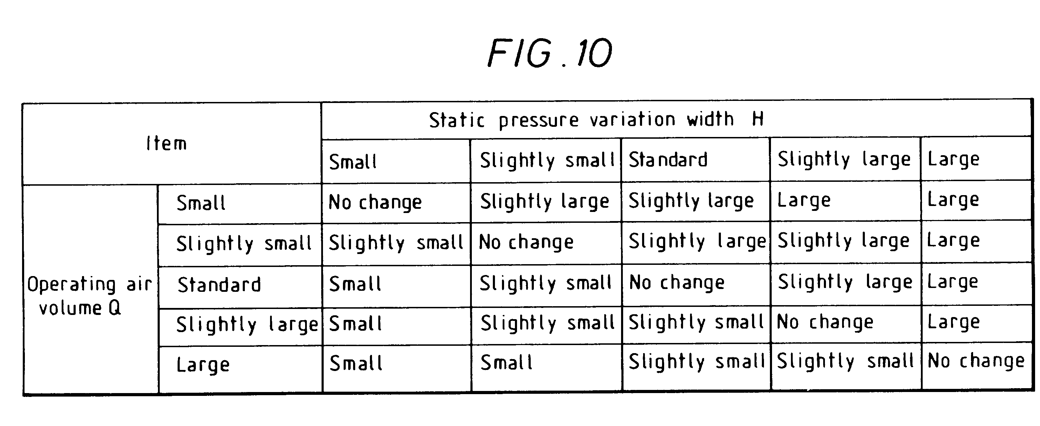

Fig. 9 illustrates the fuzzy calculation carried out by the fuzzy calculator 18. Rule 1 obtains the area of membership BI of the output from whichever is smaller of the adaptation for membership $A_{11}$ of the input $x_1$ and that for membership $A_{12}$ of the input $x_2$. Rule 2 likewise obtains the area of membership $B_2$ of the output. Then the areas corresponding to the number of rules are overlaid to get a center of gravity. This center of gravity is the output of the fuzzy calculation.

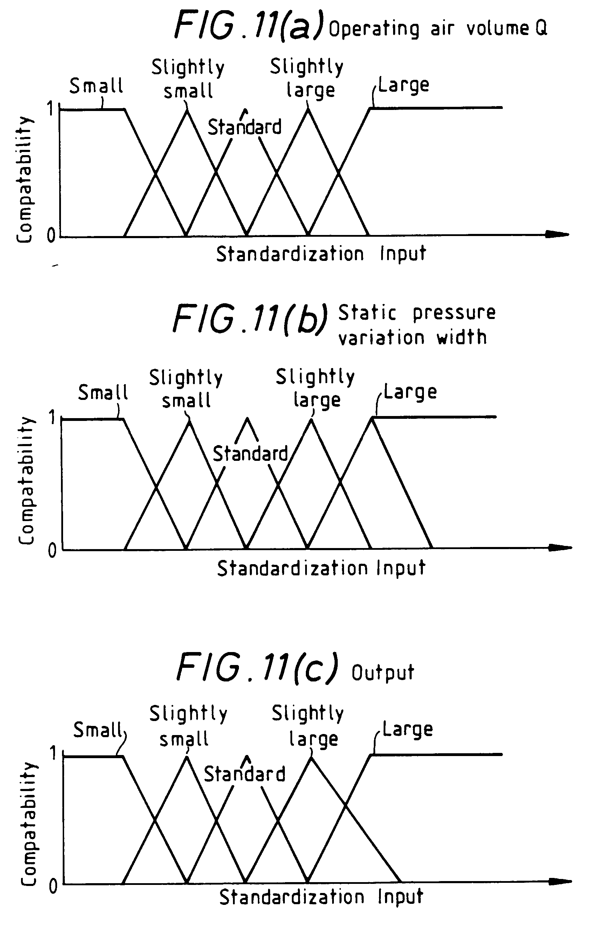

Fig.10 illustrates a fuzzy rule suitable for use on the vacuum cleaner of this embodiment of the present invention. Similarly, Fig.11 shows the membership function suitable for the vacuum cleaner of this embodiment of the present invention. The air volume Q for operation corresponds to input $x_1$. Air volume Q can be obtained as the absolute value H of the static pressure which is the output from load condition detector 7, or as a function of the phase control angle of triac LS1 which is a control element when the fan motor 23 is an AC rectifier motor. The static pressure variation width $\Delta H$ corresponds to input $x_2$. The static variation width $\Delta H$ is influenced by the operating force of the user who operates the suction nozzle 39 and by the type of floor surface to be cleaned; it is mainly influenced by the operating force. The membership functions of the input and output are assumed to have five members; "small", "slightly small", "standard", "slightly large", "large".

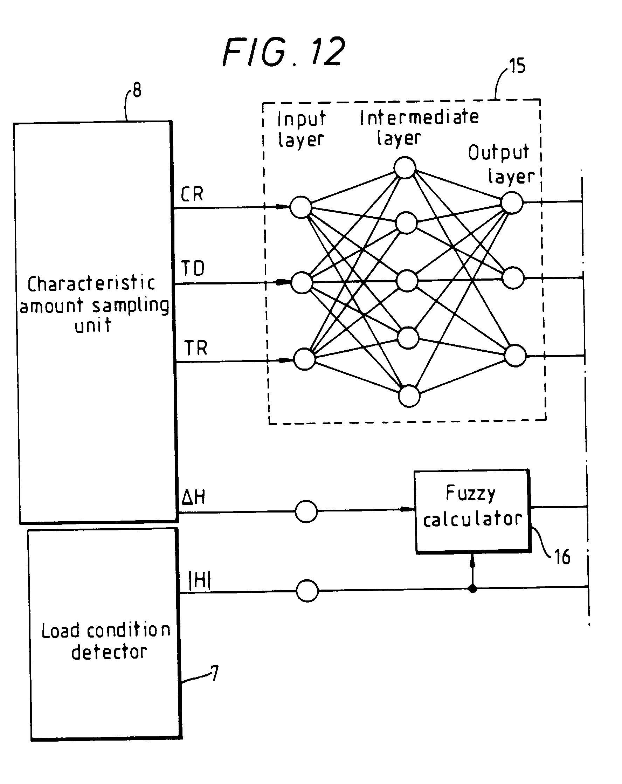

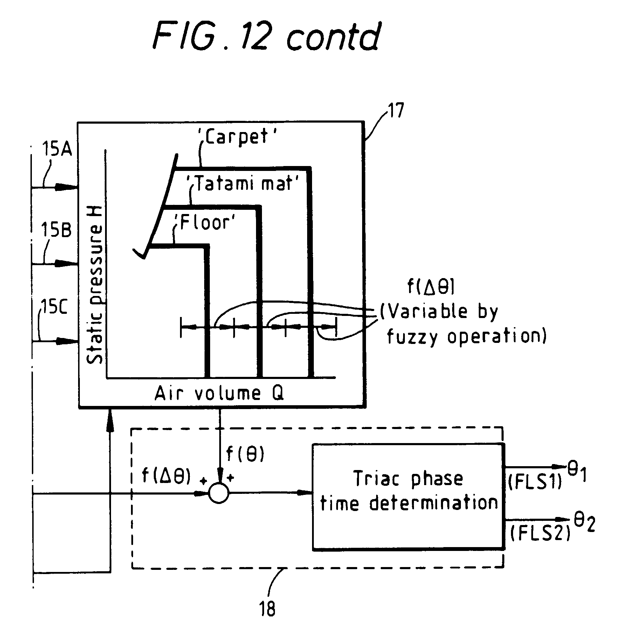

Fig. 12 shows the processing of the control block diagram including the neural calculation and fuzzy calculation. The neural calculator 15 receives the number of characteristics corresponding to crosses CR operating time difference TD and operating time ratio TR, which are output from the characteristic amount sampling unit 8, and in particular from that part 8A in Fig. 2, and has a neural network configuration which is referred to as a "hierarchical network." It has input layer, intermediate layer and output layer. Rules of learning known as name of "back propagation" are used as weight coefficient $\omega_i$ for each unit. Signals are fed to the input layer, and the value issued from the output layer is compared with a desired value ("teacher" data). The intensity of combination between units is controlled so that the value will be the minimum; this intensity is represented by the weight coefficient. Output signals 15A, 15B and 15C of the neural calculator 15 respectively correspond to "floor", "tatami mat" and "carpet". The suction characteristic determiner 17 generates a signal for determining the air volume Q corresponding to "floor", "tatami mat" and "carpet" from the output of the neural calculator 15, and phase control angle $f(\theta)$ which provides constant static pressure H.

The said constant air volume Q ensures the minimum air volume and static pressure requirements at the suction nozzle 39. The static pressure is increased according to the amount of clogging of the filter. Constant static pressure H prevents excessively the close contact between the floor surface 1 and the suction nozzle. Even if foreign substances adhere to the suction nozzle 39, the static pressure rises only to a certain value; therefore, this feature has the advantage that such foreign substances can easily be removed. Thus, the suction force of the cleaner is proportional to the product of the air volume Q and the static pressure H. Since the dust suction force depends on the air volume Q, the phase control angle $f(\theta)$ is determined so as to correspond to a constant air volume command and a constant static pressure command, which are issued according to the type of cleaned floor surface. It is possible to determine whether the air volume command and static pressure are constant or not from the static pressure value because the absolute value of the static pressure is input.

The static variation width $\Delta H$ (which is output from the characteristic amount sampling unit 8) corresponding to the floor surface and the absolute value H of the static pressure (which is the output from the load condition detector 7), are used by the fuzzy calculator 16 to carry out fuzzy calculation, and it samples the operating force of the user at the suction nozzle 39. On the basis of the result obtained, it issues a correction value $f(\Delta\theta)$ for the phase control angle. This correction value $f(\Delta\theta)$ of the phase control angle will be represented in terms of the air volume. The phase time determiner 18 finds the sum of the phase control angle $f(\theta)$ which is the output from suction characteristic determiner 17 and the correction $f(\Delta\theta)$ of the phase control angle which is the output from fuzzy calculator 16, and determines the phase control angle $\theta_1$ of triac FLS1 and phase control angle $\theta_2$ of triac FLS2. The phase control angle $\theta_4$ is the phase control angle of the fan motor 23, the air volume of which is made constant depending on the floor surface to be cleaned. The phase control angle $\theta_2$ determines the speed (number of revolutions per second) of the powered brush motor 25 in the suction nozzle, depending on the floor surface. The motor speed increases from "floor", to "tatami mat" and from "tatami mat" to "carpet".

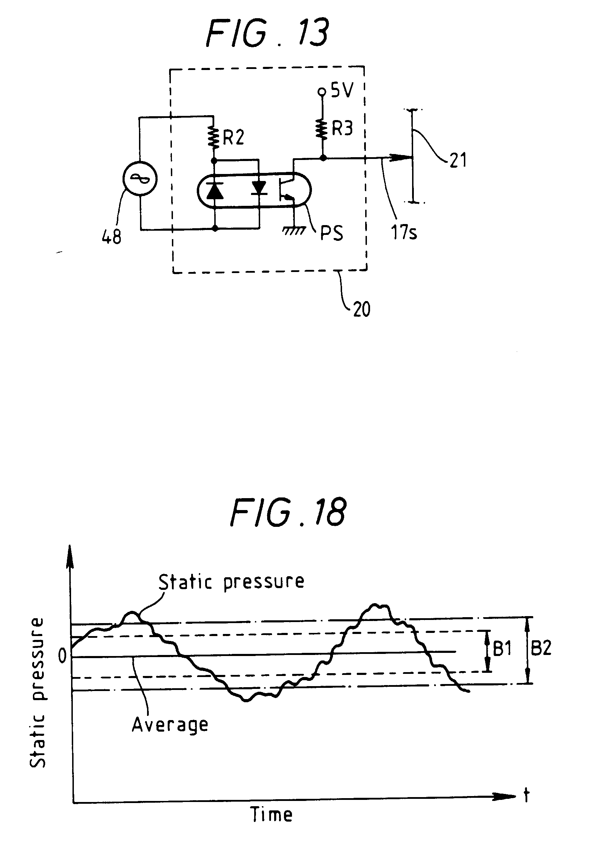

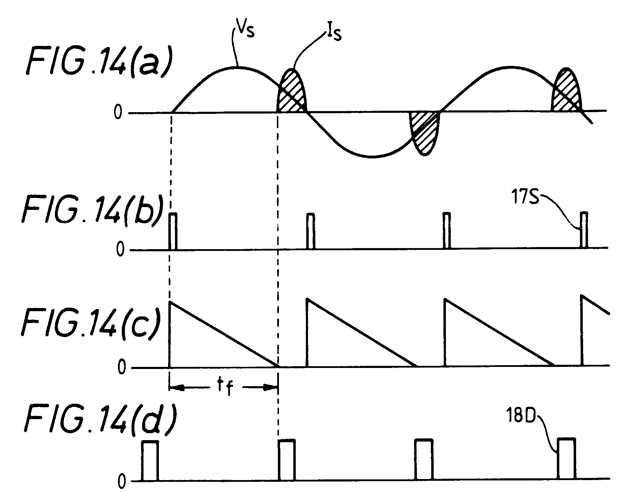

The processing of the firing signal will now be described. Fig.13 illustrates the configuration of the zero-cross detecting circuit 20, and Figs.14(a) to 14 shows the voltage and current applied to the motor. When the AC power supply 48 has voltage Vs shown in Fig.14 (a) the zero-cross signal 17S shown in Fig.14(b) is obtained by means of the zero-cross detecting circuit 20 comprising a resistance $R_2$, photocoupler PS and resistor $R_3$. Synchronous with the rise of said zero-cross signal 17S, the microcomputer 21 causes the count timer shown in Fig.14 (c) to be synchronized.

When the count timer is at zero, the microcomputer 21 issues a firing signal 18D to triac FLS1 and FLS2. Although not illustrated, it is possible to reverse the zero-cross signal so that the count timer will operate in synchronization with the fall of the zero-cross signal 17S. The firing signal processor 19 receives the output signal from the triac phase time setting processor 18 and sets the time t of the count timer. Adjustment of the time changes the voltage applied to the motor, thereby providing control of the motor speed.

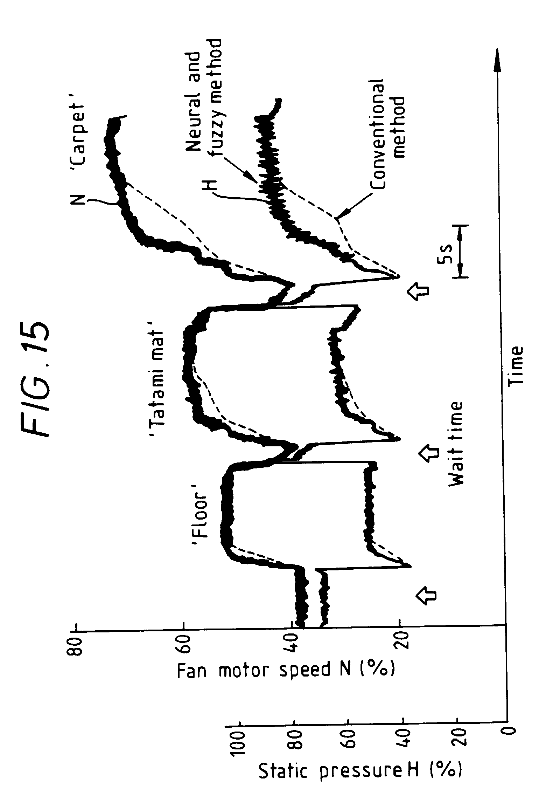

Fig.15 shows the result of operation when a vacuum cleaner using the first embodiment of the present invention is actually operated on a floor surface. From Fig. 15, it can be seen that the neuro/fuzzy control of the present invention requires less time to reach the optimum motor speed, (corresponding to the optimum suction force, than the conventional method. Hence, the arrangement of to the present invention provides quicker response speed than the conventional method. The wait time shown in Fig.15 denotes the time for which the system determines that it is not being used for a cleaning operation. Thus, the sensitivity of the pressure sensor as well as the motor speed are reduced to save energy.

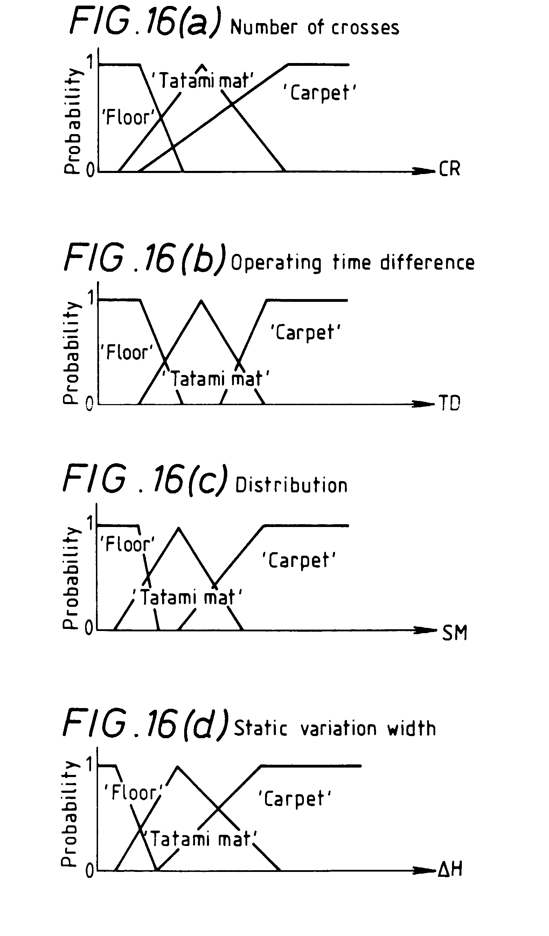

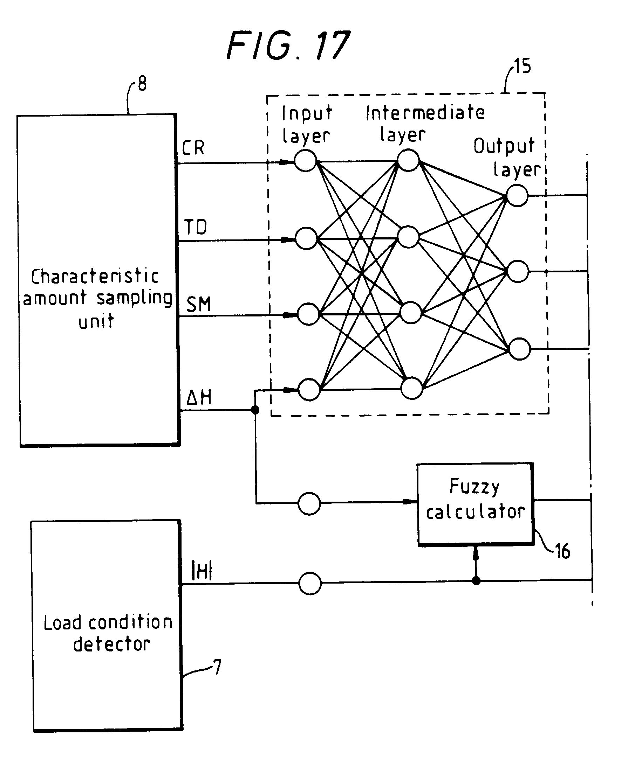

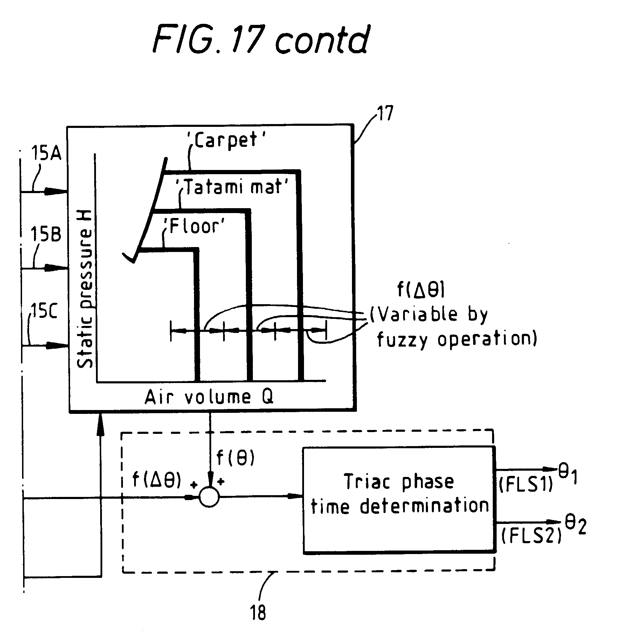

Next, another embodiment will be described. Fig. 16(a) to 16(d) represents relationships between the type of floor surface and characteristics corresponding to the cleaned floor surface, while Fig.17 shows the processing by means of the optimum controlled variable determining mechanism using the characteristics corresponding to the floor surface given in Fig.16. The difference of this embodiment from the relationship between the floor surface and characteristics amount corresponding to the floor surface given in Fig.7 and the processing of the optimum controlled variable shown by Fig. 12 is that distribution MS shown in Fig.16 (c) and static pressure variation width shown in Fig.16 (d) are derived and used in addition to the number of crosses CR in Fig. 16 (a) and the operating time difference TD in FIG.16 (b). The distribution SM is represented by Equation 3 below.

$$SM = \frac{1}{n} \cdot \sum_{i=1}^{n} (\chi_1 - Hm) \qquad \text{.... Equation 3}$$

Thus, the difference between average static pressure Hm and momentary static pressure $\chi_i$ over a suitable sampling period is squared and the results are averaged over the sampling period. Since the number of inputs to the neural calculation is increased as a result, it is possible to provide the vacuum cleaner which can be operated at the optimum suction force in dependence on the type of floor surface, although the calculation time needed by the neural network is increased.

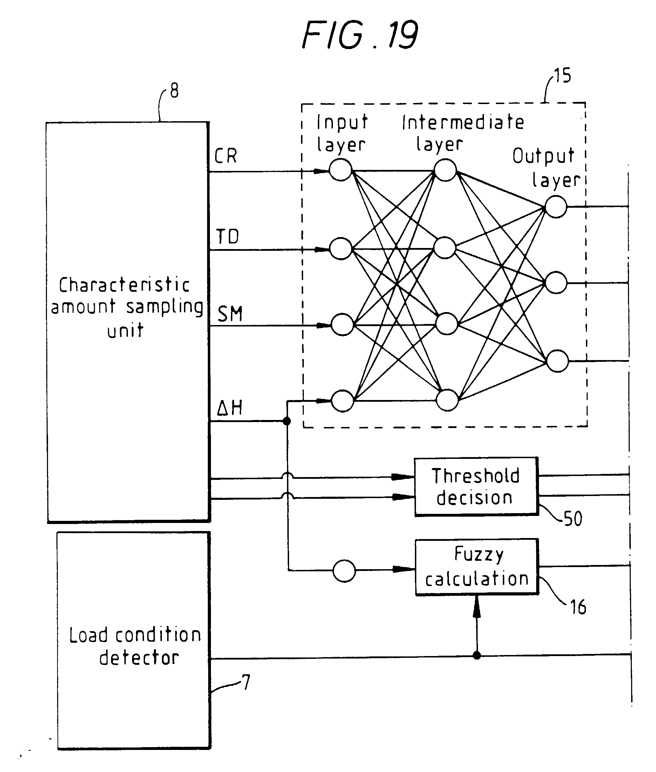

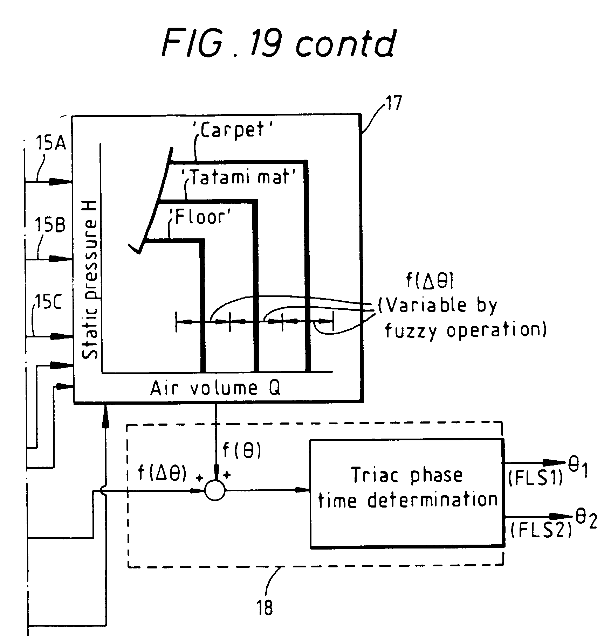

To improve the response speed, and yet maintain optimum suction force in dependence on the type of floor surface, calculation in the neural network may be bypassed if the floor surface can be determined by means of a threshold monitor. Thus, as shown in Fig. 18, bands $B_1$ and $B_2$ are applied to the output signal from the low-pass filter 17. If the output from the low-pass filter is within bandwidth $B_1$, the floor surface to be cleaned is identified as "Floor" output from the low-pass filter 13 is greater than bandwidth $B_2$, the floor surface to be cleaned is identified as "CARPET". The monitoring of the signal to detect the threshold levels $B_1$ and $B_2$ is achieved by the threshold decision circuit 50 in Fig. 19. That threshold decision circuit 50 receives inputs from the characteristic amount sampling unit 8 and the load condition detector 7. By use of the threshold decision circuit 50, the neural calculator 15 is applied only when the decision concerning the type of floor surface is not derivable from a single characteristic.

In the embodiments of the present invention described above, more than one characteristic has been derived from the average static pressure during a suitable sampling time. It is possible to detect more than one characteristic amount from the median between the maximum and minimum values of the static pressures during the sampling time.

The embodiments of the present invention described above thus provide a vacuum cleaner which automatically ensures the optimum suction force by deriving out more than one characteristic corresponding to the floor surface from the shape of the output signal of the load condition detecting sensor, by conducting neural and fuzzy calculations from those characteristics, and by controlling the fan motor in conformity to the type of floor surface.

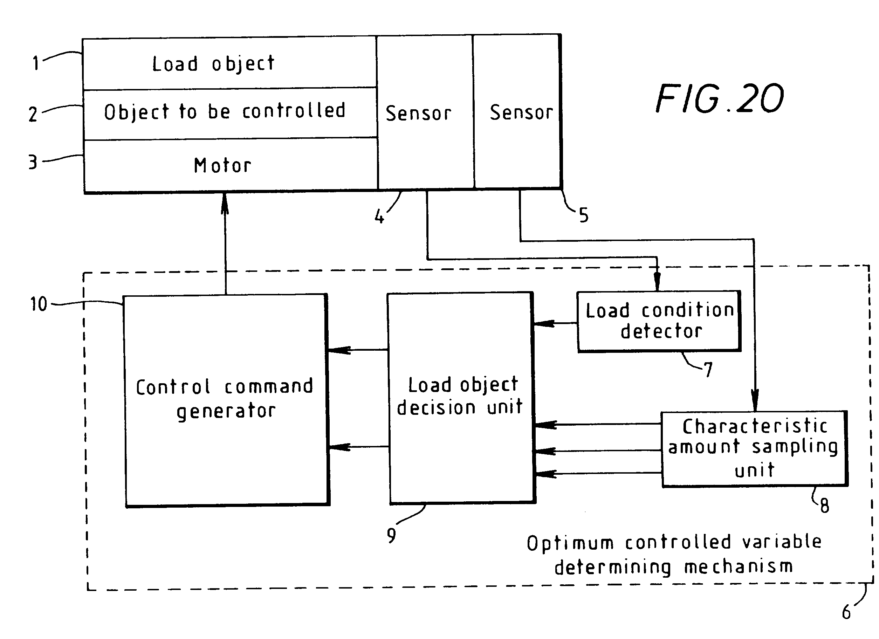

Fig. 20 shows the control system of another embodiment of the present invention. This embodiment is similar to that of Fig. 1, and corresponding parts are indicated by the same reference numerals. In the embodiment of Fig. 20, there is a load condition sensor 5 in addition to the sensor 4, sensor 4 again being a floor surface detecting sensor for a vacuum cleaner, and a detecting sensor for the volume, quality and contamination of the cloth in the case of the washing machine. It can be seen that the sensor 4 outputs to the load condition detector 7, and the load condition sensor 5 outputs only to the characteristic amount sampling unit 8. Therefore the current operating conditions are detected from the output signal of the load condition sensor 5 by the characteristic amount sampling unit 8 for load object 1, and more than one characteristic corresponding to the type of load is detected by the characteristic amount sampling unit 8 from load condition sensor 5. The control operation is then similar to the embodiment of Fig. 1.

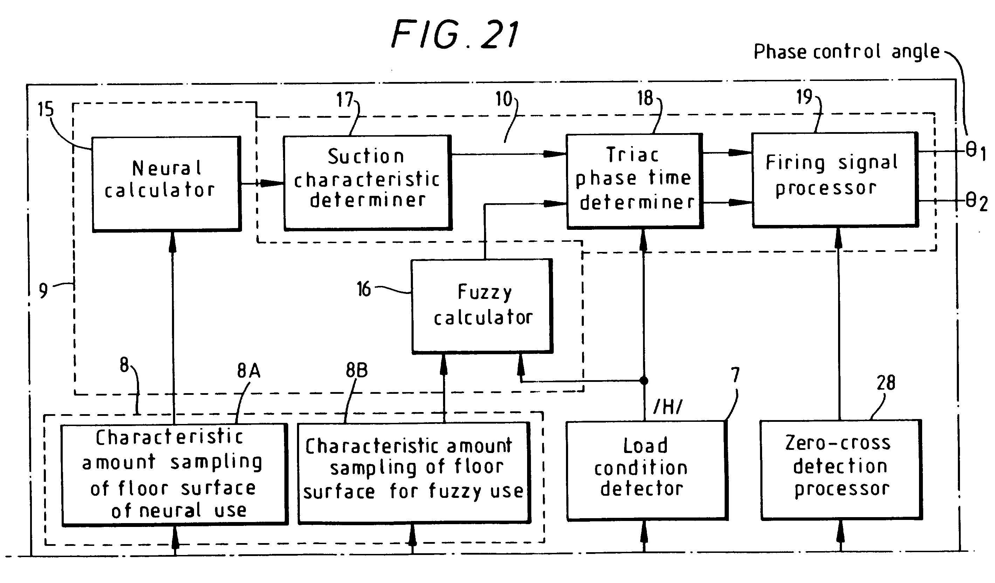

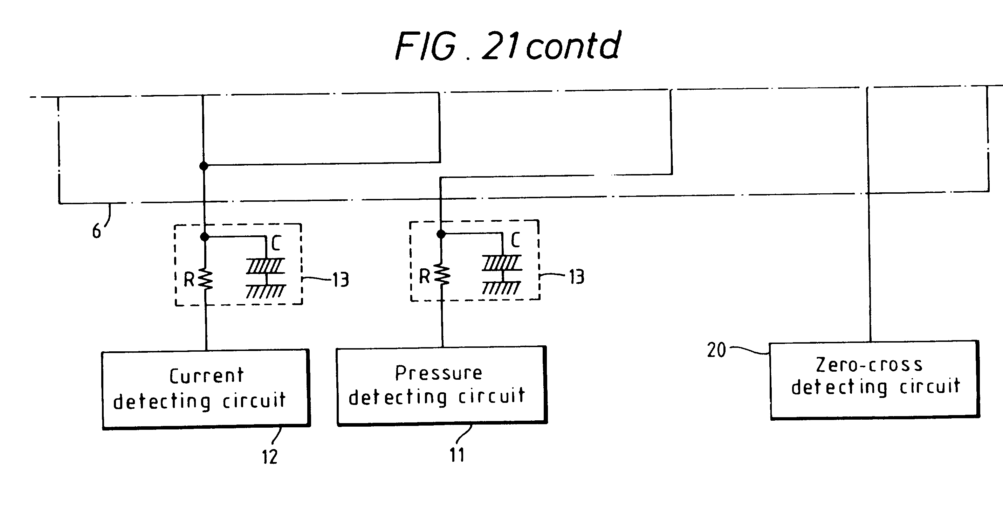

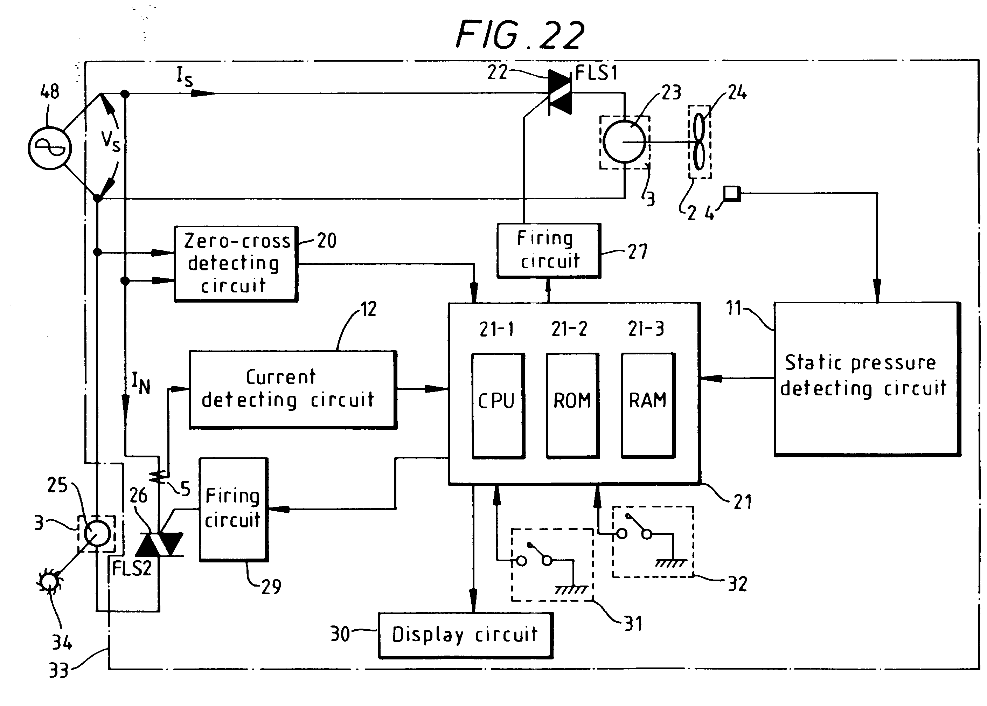

Fig. 21 is a block diagram representing the configuration of the vacuum cleaner control system, of Fig. 20, and Fig. 22 shows the configuration of the vacuum cleaner control circuit. Figs. 21 and 22 are generally similar to Figs. 2 and 3, and corresponding parts are indicated by the same reference numerals.

In Fig. 21, the pressure detecting circuit 11 converts and amplifies the output from the pressure sensor, in a similar way to the arrangement of Fig. 2. Similarly a current detecting circuit 12 converts and amplifies the output from the current detecting sensor 5 which detects current $I_N$ flowing to the powered brush motor 25. In Figs. 2 and 21, the low-pass filter comprising resistor R and capacitor C removes the noise component from the output signal in the pressure detecting circuit 12. In a similar way a low-pass filter 14 comprising the resistor $R_1$ and capacitor $C_1$ removes the noise component from the output signal in the current detecting circuit 12.

In Fig. 21, it can be seen that there is no input from the pressure detecting circuit 11 to the characteristic amount sampling unit 8. Hence, the characteristic amount sampling unit receives signals from one sensor only (load condition sensor 5).

Fig. 22 shows that the load condition sensor is connected in series with the triac 26, and the current detecting circuit is connected between the load condition sensor and the microcomputer 21. Except for this, the structure of the circuit of Fig. 22 is the same as that of FIg. 3 and so will not be discussd in more detail.

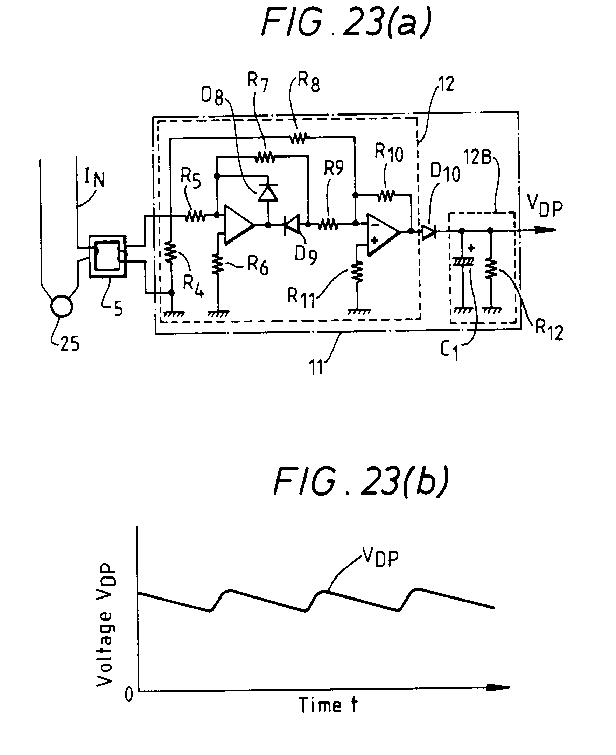

Figs. 23(a) and 23(b) illustrate the detection circuit of the powered brush motor of this embodiment. Fig. 23(a) illustrates the circuit configuration. Fig. 23(b) shows an example of the output from the current detection circuit. In Fig. 23(a), load current $I_N$ supplied to the powered brush motor 25 is interrupted AC current waveform, similar to the power current $I_S$ illustrated in Fig. 14 (a). It is then detected by the current detecting sensor 5 and is input to current detecting circuit 12. The current detecting circuit 12 converts it into a DC voltage signal $V_{DP}$ corresponding to the peak current $I_N$ shown in Fig. 14(b), by means of the full-wave rectifying amplifier circuit 12A, diode $D_{10}$ and peak hold circuit 12B (the peak current of load current $I_N$ is detected because the peak current of powered brush motor 25 undergoes a significant change in response to the movement of the suction nozzle 39. As shown in Fig. 23(b), the output signal $V_{DP}$ changes in dependence on the loaded condition of the powered brush motor 25 when the suction port is operated, when the bristles 44 of the rotary brush 34 contacting the floor surface to be cleaned.

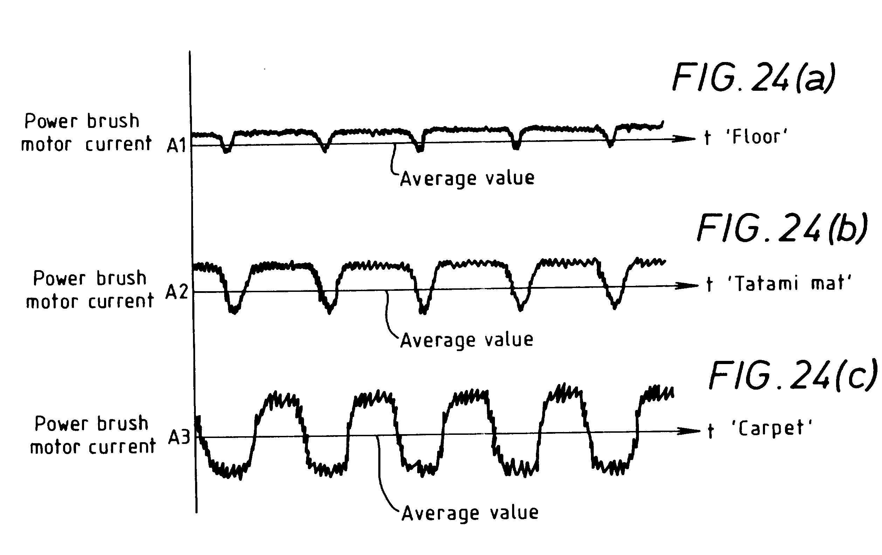

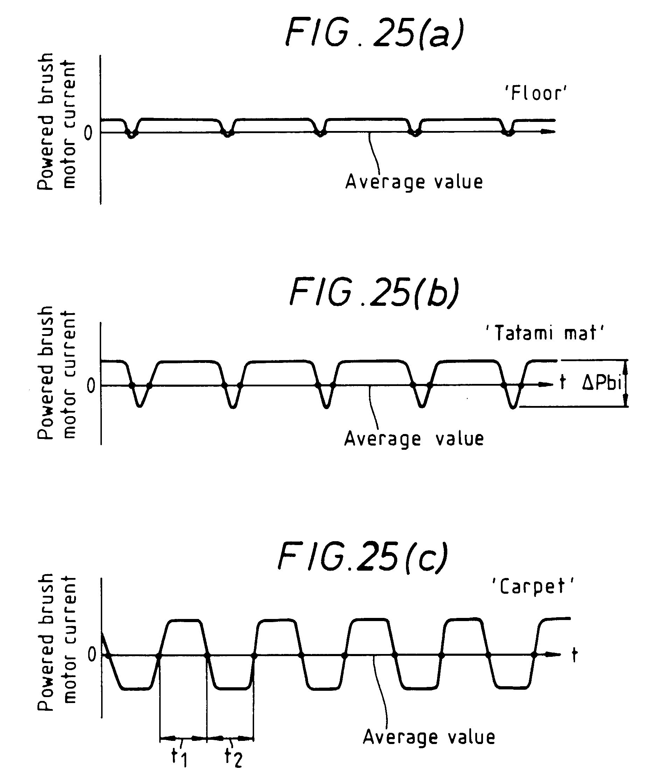

If the user operates the suction nozzle 39 on the floor surface 1 back and forth during the operation of fan motor 23, the output signal of current detecting circuit 12 fluctuates as illustrated in Fig. 24(a) to 24(c) and the output signal of low-pass filter 13 fluctuates as shown in Fig. 25(a) to 25(c). It can be seen that he curves of Fig. 25(a) to 25 (c) are closely similar to those of Figs. 6(a) to 6(c), except that the variation is of current'rather than pressure. Thus, similar characteristics can be derived therefrom.

Thus, the output signal from the current detecting circuit 12 contains a noise component, but the output signal from low-pass filter 13, after removal of the noise component, differs according to the type of floor surface 1, and characteristics can be derived from said output signals in accordance with the type of floor surface 1.

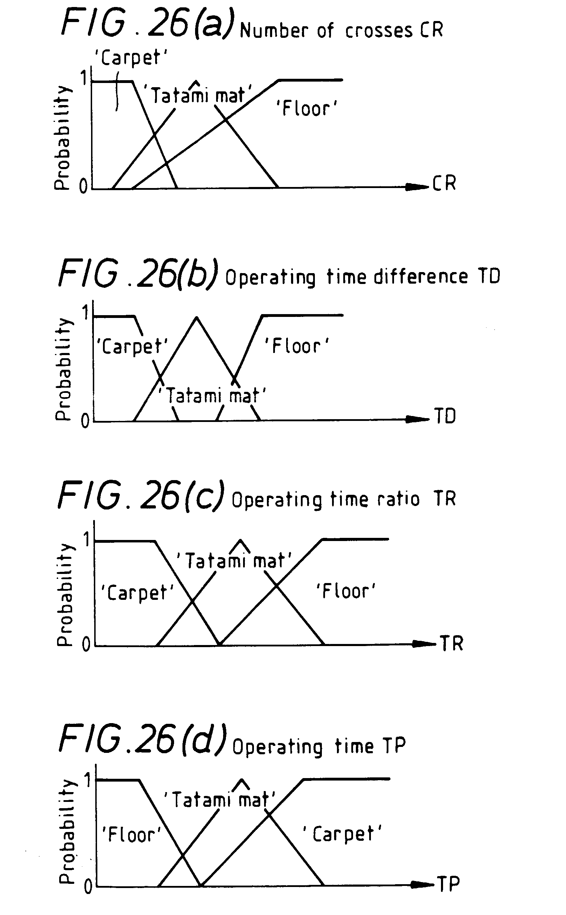

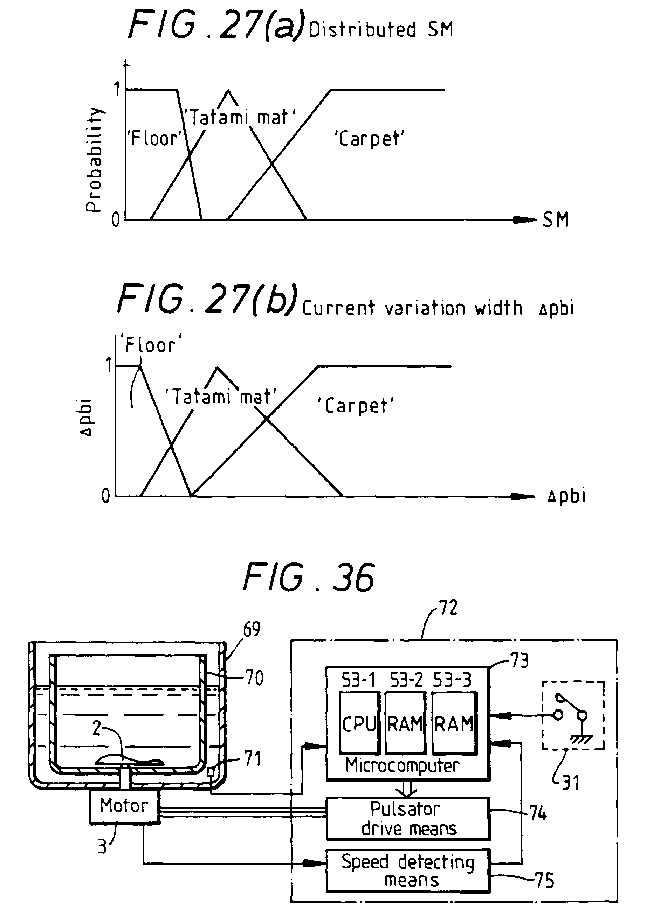

As an example of characteristics corresponding to the floor surface, the average of data obtained within a certain sampling time was investigated, in a similar way to the embodiment described previously. Again the number of times the data obtained crossed this average value (when the average value is crossed) was derived as number of crosses CR, the time the data exceeds the average is considered as $t_1$, the time the data is less the average is assumed as $t_2$. Then, $(t_1 - t_2)$ is derived as an operating time difference TD, $(t_1/(t_1 + t_2))$ is derived as an operating time ratio TR, $(t_1 + t_2)$ is derived as an operating time TP, and the difference between the maximum and minimum values of powered brush motor currents is derived as a current variation width pbi. Fig. 26(a) to 26(d) illustrate variations in the number of crosses CR operating time difference TD, the operating time ratio TR and the operating time TP for different types of floor surface 1 in a similar way to Figs. 7(a) to 7(c). Fig. 27(a) shows the distribution SM', which is described below:

$$SM' = \frac{1}{n} \sum_{i=1}^{n} (\chi i - Pbim)^2$$

This is similar to SM derived from Equation 3, but based on a pressure measurement.

Fig. 27(b) shows the relationship between the current variation width pbi and the floor surface to be cleaned. As previously, if an attempt was made to identify the type of floor surface 1 from one characteristic amount corresponding to the decision is difficult because more than one floor surface 1 may have the same value of the characteristic.

However, when the characteristic amount corresponding to each type of floor surface is compared, it is possible to determine the type of floor surface 1 by using more than one characteristic corresponding to the floor surface because the corresponding position of floor surface 1 with respect to the output level is different. Thus, the effect is similar to embodiments previously described.

The neural calculator 15 of Fig. 21 operates in a similar way to that in Fig. 2, although the inputs are based on current rather than pressure. The operation of the fuzzy calculator 16 is also similar, and weightings are used in a similar way to Fig. 8. Curves corresponding to Fig. 9 are derived, and a table corresponding to Fig. 10 can also be derived with the state pressure variation width being replaced by a current variation width pbi. Then probability curves corresponding to Figs. 11(a) to 11(c) are derived, again with teh static pressure variation width H of Fig. 11(b) replaced by the current variation width Δpbi. The shape of the probability curves are the same.

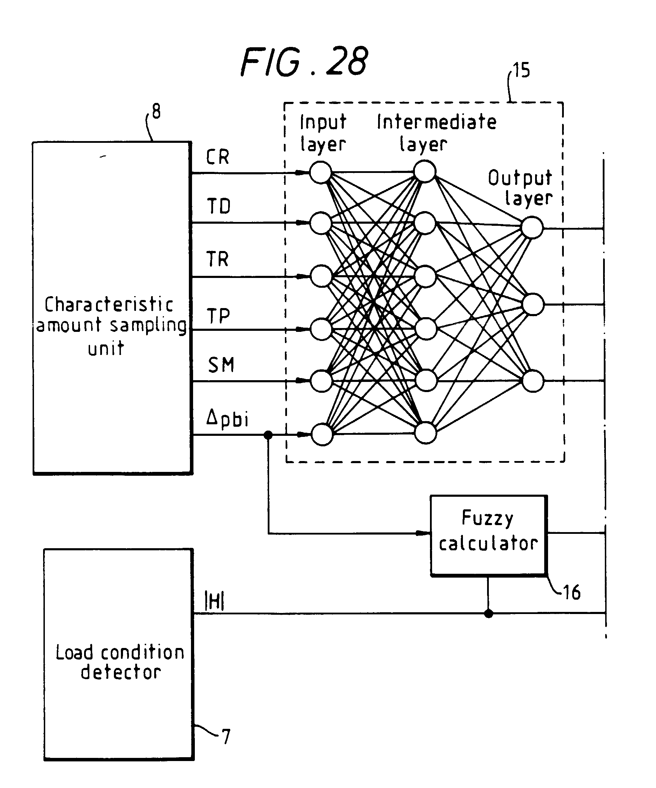

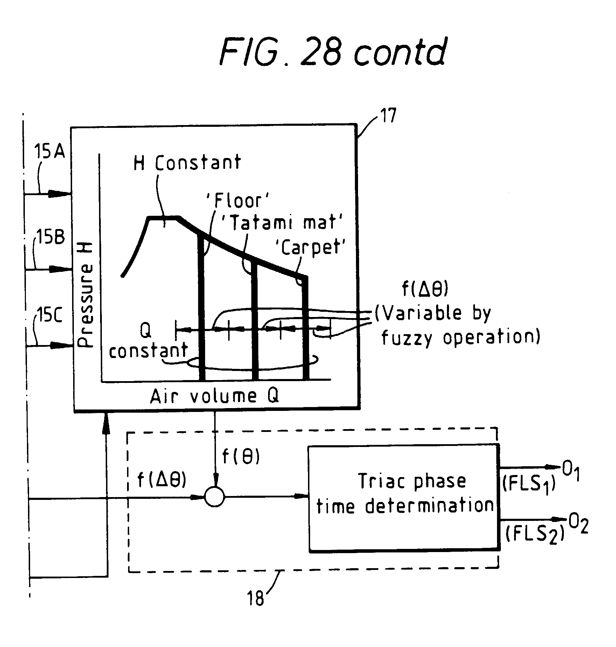

Fig. 28 shows the processing of the control block diagram including the neural calculation and fuzzy calculation Fig. 28 can be seen to be generally similar to Fig. 12. The neural calculator 15 receuves characteristics corresponding to the number of crosses CR operating time difference TD, operating time ratio TR, operating time TP, distributed SM and current variation width pbi which are output from the characteristic amount sampling unit 8, and in particular from the part A8 thereof, and has a neural network configuration which is referred to as a "hierarchical network." As in Fig. 12 it has an input layer, intermediate layer and output layer, and each unit of each layer is configured as illustrated in Fig. 8. Rules of learning known as "back propagation" are used as weight coefficient $\omega_i$ for each unit. Signals are fed to the input layer, and the value derived from the output layer is compared with a desirable value ("teacher" data). The intensity of combination between units is controlled so that the value will be the minimum; this intensity is represented by the weight coefficient. Output signals 15A, 15B and 15C of the neural calculator 15 respectively correspond to "floor", "tatami mat" and "carpet". The suction characteristic determiner 17 generates a signal for determining the air volume Q corresponding to "floor", "tatami mat" and "carpet" from the output of the neural calculator 15, and phase control angle f(θ) which provides constant pressure H. The constant air volume Q ensures the minimum air volume and pressure requirements at the suction nozzle 37.

The pressure is increased according to the amount of the filter. Constant pressure H prevents excessively close contact between the floor surface 1 and the nozzle 39 port. Even if foreign substances adhere to the nozzle 39, the pressure rises only to a certain value; therefore, this feature has the advantage that such foreign substances can easily be removed.

Thus, the suction force of the cleaner is proportional to the product of air volume Q and state pressure H. Since the dust suction force depends on the air volume Q, phase control angle f(θ) is determined so as to correspond to a constant air volume command and a constant pressure command, which are issued according to the type of cleaned floor surface. It is possible to determine whether the air volume and pressure are constant or not can be determined from the pressure value because the absolute value of the pressure is input.

The current variation width pbi (which is output from the characteristic amount sampling unit 8) and the absolute value IHI of the pressure (which is the output from the load condition detector 7) are used by the fuzzy calculator 16 to carry out fuzzy calculation, and it samples the operating force of the user. On the basis of the result obtained, it issues a correction value f(Δθ) of the phase control angle. This correction value f(Δθ) of the phase control angle will be represented in terms of the air volume.

The phase time determiner 18 finds the sum of the phase control angle f(θ) which is output from suction characteristic determiner 17 and the correction value f(Δθ) of the phase control angle which is the output from fuzzy calculator 16, and determines the phase control angle $\theta_1$ of triac FLS1 and phase control angle $\theta_2$ of triac FLS2. The phase control angle $\theta_1$ is the phase control angle of the fan motor 23, the air volume of which is made constant depending on the floor surface to be cleaned. The phase control angle $\theta_2$ determines the speed (number of revolutions per second) of the powered brush motor 25 in the suction nozzle, depending on the floor surface. The motor speed increases from "floor" to "tatami mat" and from "tatami mat" to "carpet".

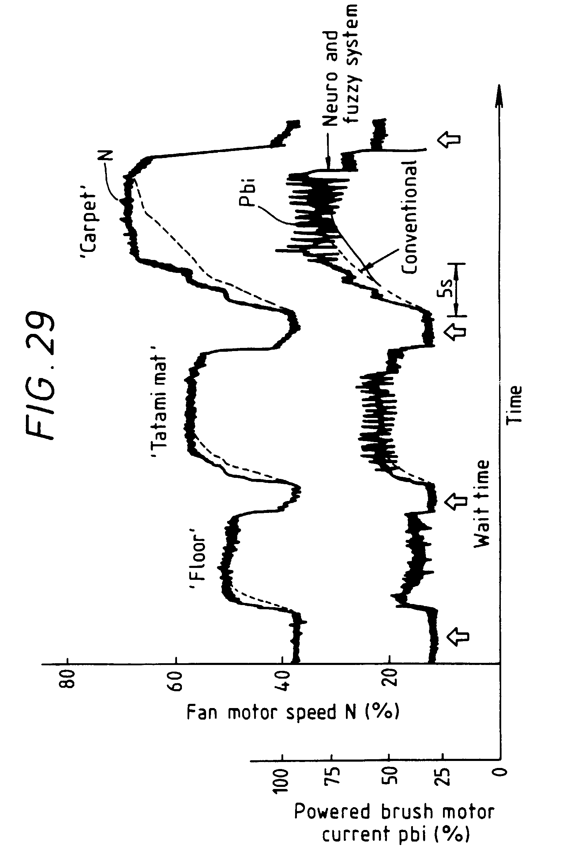

Fig. 18 shows the result operation when a vacuum cleaner using the control system of this embodiment of the present invention is actually operated on a floor surface. Fig. 29 is generally similar to Fig. 15. Thus, it can be seen that, compared with the conventional method, the neuro/fuzzy control of the present invention requires less time to reach the optimum motor speed, (corresponding to the optimum suction force) than the conventional method (where only fuzzy logic is used). Hence, the arrangement of this embodiment of the present invention provides quicker response speed than the conventional method. The wait time shown in Fig. 29 denotes the time for which the system determines that it is not being used for a cleaning operation. Thus, the sensitivity of the pressure sensor is increased and the motor speed is reduced to save energy.

Next, another embodiment will be described. Components having the same or similar functions to those already described will be referred to as the same reference numerals, and detailed description of such components will not be repeated.

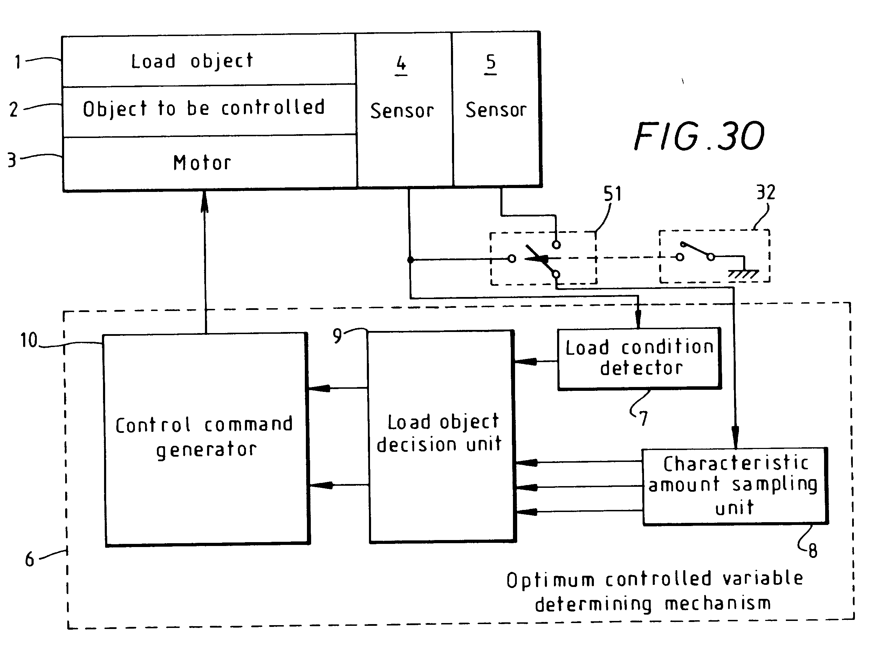

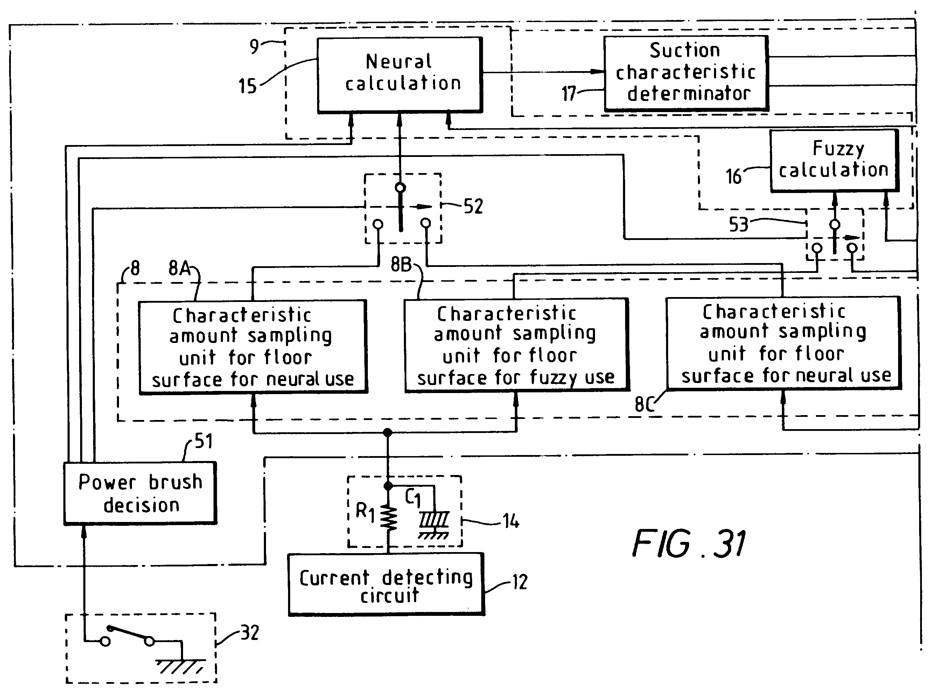

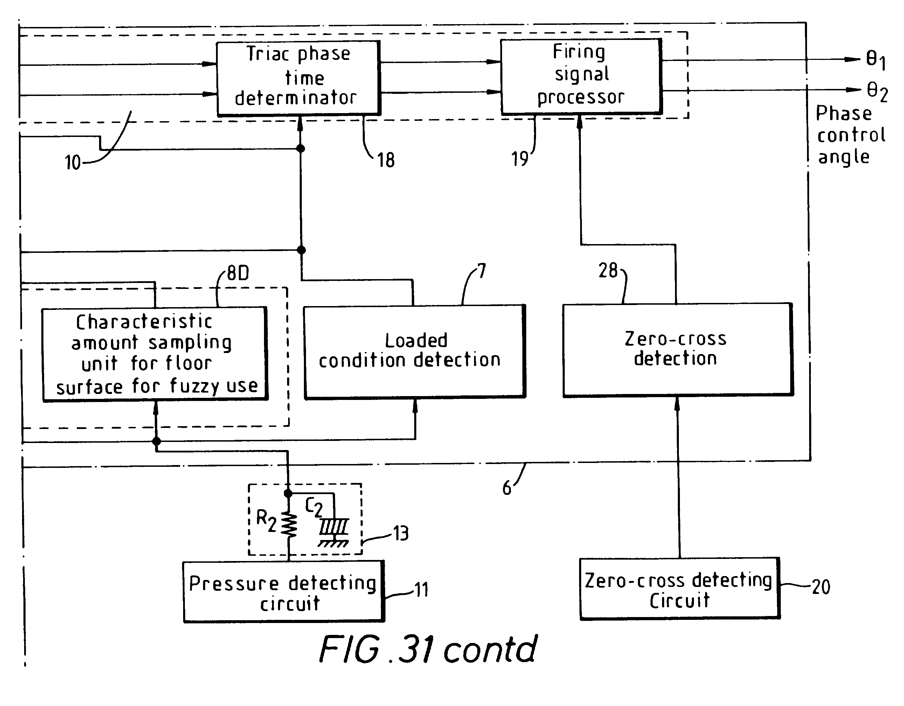

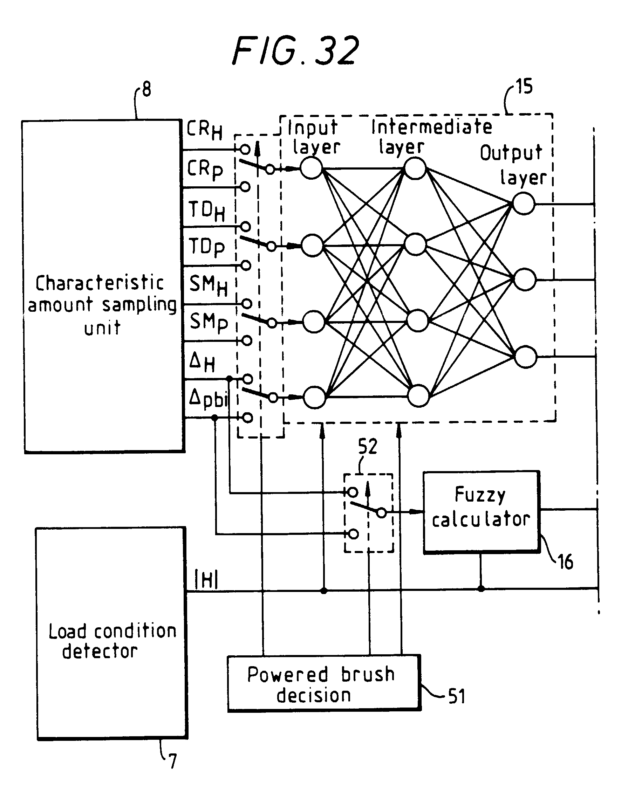

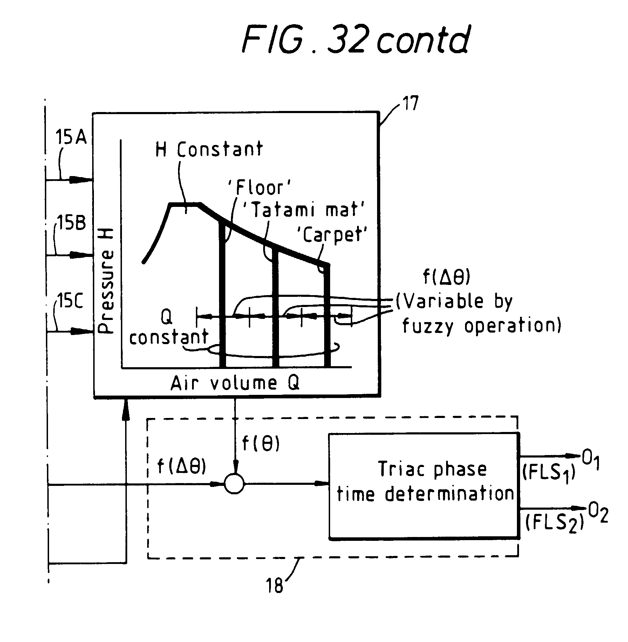

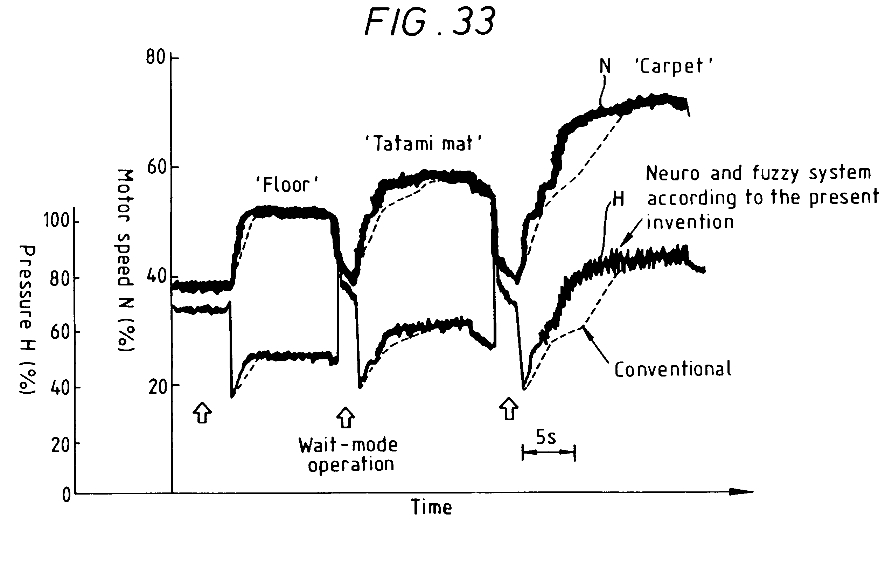

Fig. 30 shows a control system provided with a switching circuit. The circuit differs from that of Fig. 20 in that a brush power decision 51 is made according to the turning on and off of a power brush switch 32, and the output from sensor 4 or 5 is used as input to the characteristic sampling unit 8 corresponding to floor surface to be cleaned. As an example, Fig. 31 shows a block diagram showing the approximate configuration of the control system provided with the switching circuit. Fig. 32 shows the processing of the optimum controlled variable determining mechanism, and Fig. 33 shows the result of operation of a vacuum cleaner using a pressure sensor. The arrangement of Fig. 30 differs from that of Figs. 21 and 28 in that the powered brush switch 32 is subjected to powered brush decision 51. When the powered brush switch 32 is on, the characteristic sampling for neural use 8A obtained from the output of the low-pass filter 13 is used as an input for the neural calculation 15, while characteristic amount sampling for fuzzy use 8B obtained from the output of low-pass filter 13 is used as an input for the fuzzy calculation 16. When the powered brush switch 32 is off, the characteristic amount sampling for neural use 8C obtained from the output of the low-pass filter 13 is used as an input for the neural calculation 15, while characteristic amount sampling 8D for fuzzy use obtained from the output of low-pass filter 14 is used as an input for the fuzzy calculation 16.

Decision and switching are performed by brush power decision 51 and selector switches 52 and 53. However, when the output from the pressure detecting circuit 11 is used, the pressure variation depends on the magnitude of the force of operation of the vacuum cleaner, and the weight coefficient of the neural network must be changed in dependence on the magnitude of the suction force. Thus, the absolute value H of the pressure which is output from the load status detection 7 is used as an input for neural calculation 15. Furthermore, when outputs from current detecting circuit 12 and pressure detecting circuit 11 are used, it is also necessary to change the weight coefficient of the neural network; thus, the output from the brush power brush decision 51 is used as an input for neural calculation 15. The characteristics which is the output from the characteristic amount sampling unit 8 for the floor surface to be cleaned in Fig. 32 are denoted by the subscript H when the output of pressure detecting circuit 11 is used, and the subscript P when the output of the current detecting circuit 11 is used, with $\Delta H$ representing the pressure variation width for the current variation width $\Delta pbi$. Fig. 33 illustrates the result of operation of the vacuum cleaner using the pressure sensor.

This allows setting of the optimum suction force according to the floor surface to be cleaned by using a pressure sensor, similar to the operation result using the sensor shown in Fig. 29, and it can be seen that the better response is obtained than in the conventional method. When the floor surface to be cleaned corresponds to "tatami mat" and "carpet", the speed of the fan motor gradually increases. This is because, to minimize the decision error on the floor surface, the "tatami mat" speed is selected after "floor" speed is used, in the case of "tatami mat", and the "carpet" speed is selected after "floor" and "tatami mat" speed has been used, in the case of "carpet".

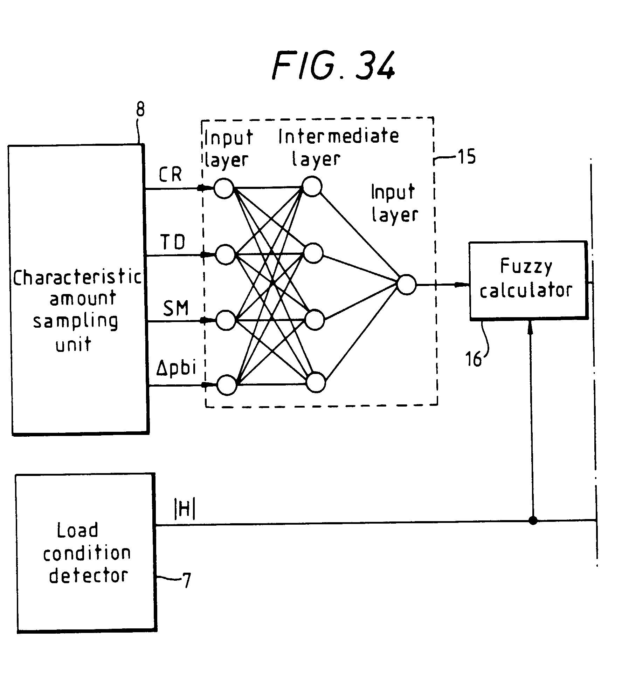

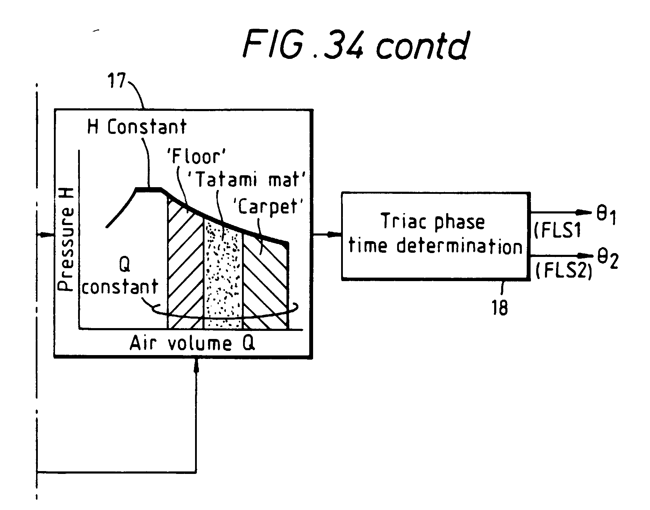

Fig. 34 shows another embodiment, which differs from that of Fig. 28 in that the output from the neural calculation 15 is input to the fuzzy calculation 16, and the fan motor operating range is determined for each floor surface by suction characteristic determination 17 in dependence to the result. Here the output layer of the neural calculation 15 of the neural network is handled as one unit. This is because fuzzy calculation is carried out with the "floor", "tatami mat" and "carpet" corresponding to the range of 0 to 1, which is the output from Sigmoid function 47 in Fig. 8.

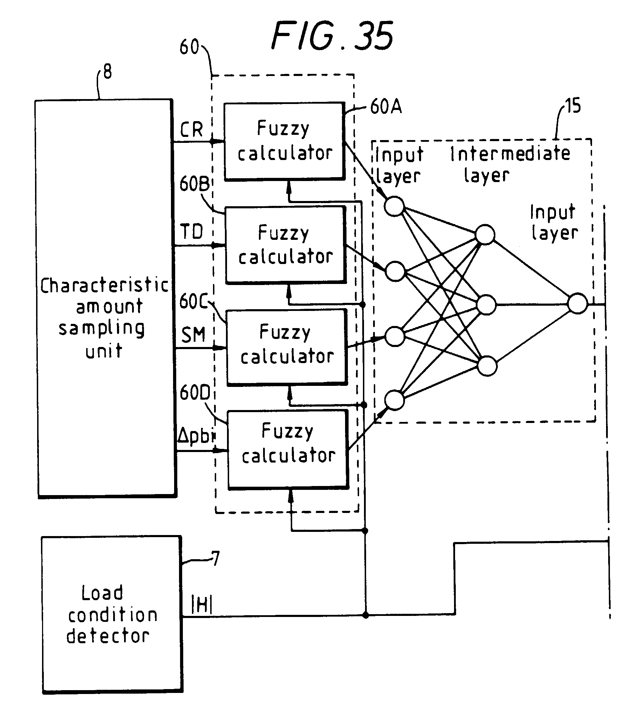

Fig. 35 illustrates another embodiment, which differs from that of Fig. 34 in that the input for the neural calculation 15 uses the output from the fuzzy calculator 60 comprising sub units 60A to 60D where characteristic amounts CR, TD, SM, $\Delta pbi$ are input. Thus, unlike previous embodiments, the fuzzy logic step is applied before the signals reach the neural network. Separate fuzzy logic operations are applied to each characteristic, and the outputs of the fuzzy logic calculation operations 60A to 60D are applied to the neural calculation 15.

As a means for fuzzy calculation, an example involving the "min-max center of gravity method" asillustrated in Fig. 9 has been described. In cases where multiple fuzzy calculations must be carried out frequently, use of the "simplified reasoning method" is more effective. The neural calculation has been explained using the neural net. It goes without saying that the linear function may be used instead of the Sigmoid function, which belongs to the neural unit and non-linear function.

The vacuum cleaner may be provided with a great variety of suction nozzles as accessories. Thus, to handle the case where the suction other than the powered brush suction nozzle is used, an embodiment has been described wherein the output of the current detecting circuit or pressure detecting circuit is selected, depending on turning on and off of a brush power switch. It is also possible to use an arrangement in which a small amount of current is applied to the powered brush motor to detect current flowing to the powered brush motor via the current detecting circuit. If the current is detected, the output of the current detecting circuit is used; if not, the output from the pressure detecting circuit is used.

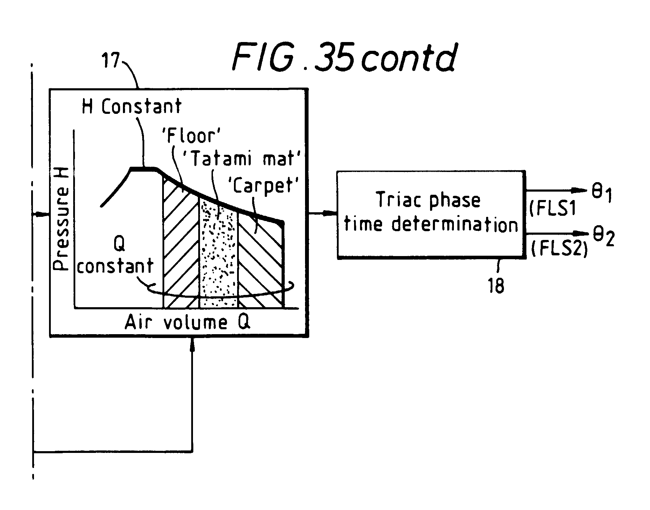

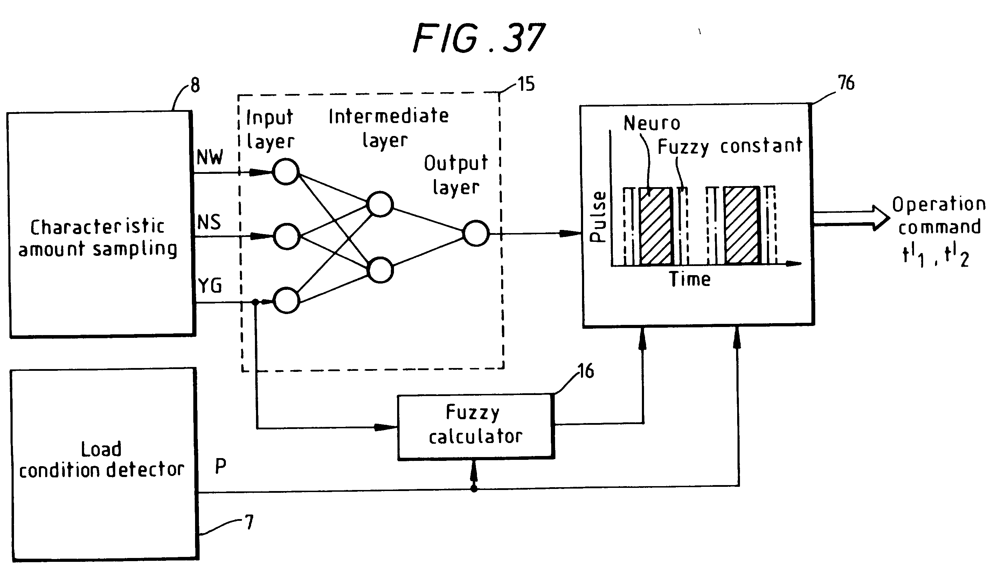

Thus, in any of the above arrangements, the present invention provides a vacuum cleaner with optimum suction force in dependence on the floor surface to be cleaned and which'gives the minimum response time. The embodiments all refer to a vacuum cleaner. However, the invention is not limited to this and an embodiment being a washing machine will now be described. Fig. 36 shows the configuration of the washing machine control circuit, and Fig. 37 illustrates the processing of the optimum controlled variable determining mechanism. Fig. 36 shows an agitator which is a control object located on the bottom of the washing tub 70, a motor 3, the washing machine body 69, a contamination detecting sensor 51 comprising a photoelectric device to detect the amount of contamination of the water a washing machine control circuit 72, a microcomputer 73, a pulsator drive means 74 to drive agitator 2, a speed detecting means 75 to detect the speed of motor 3, an operation switch 31 and a pulsator operation pattern determiner 76 which determines the operation pattern of the agitator 2. The volume NW or quality NS of cloth placed in the washing machine 70 is detected from the reduction in the speed of the motor 3, which is operated in the preliminary phase. Contamination YG sticking to the cloth appears to the surface gradually as washing proceeds.

The volume NW or quality NS of cloth is derived via the characteristic amount sampling unit 8 according to the output from the speed detecting means 55, and the contamination of the wash which changes with time is detected via the characteristic amount sampling unit 8 from the output of the contamination detecting sensor 51. The current loaded condition P of the washing machine is derived via the loaded condition detector 7 (by way of an example, the loaded condition P is obtained as a function of the ratio between the time $t_1$ when the agitator 2 is turned on and time $t_2$ when it is off. The volume NW, quality NS of cloth and contamination YG which result from characteristic amount sampling unit 8 are used as inputs to the neural calculation 15. The result of this calculation determines the time $t_1$ when agitator 2 in the hatched portion of the pulsator operation pattern determiner 56 is turned on, and $t_2$ when it is turned off. The contamination YG and loaded condition P are used as input, for the fuzzy calculation 16, and the result of this calculator determines the correction time $\Delta t_1$ and correction time $\Delta t_2$ for the time $t_1$ when the agitator 2 is turned on, and $t_2$ when it is turned off.

Then control commands $t_1'$ and $t_2'$ of the separator 2 are output to the pulsator drive means 54 from the sum of both $(t_1 + \Delta t_1)$ and $(t_2 + \Delta t_2)$ and the agitator 2 is operated under the optimum conditions in conformity to the volume, quality and contamination of the cloth, thereby ensuring quick washing without damaging the wash.

The present invention thus may provide a control system for a household electric apparatus which automatically ensures the optimum drive force by deriving more than one characteristic by conducting the neural and fuzzy calculations on the basis of those characteristics, and by controlling the apparatus in dependence on the result of the neural and fuzzy calculations.

**Claims**

1. A method of controlling a controlled object (2), comprising generating (8) a plurality of control characteristics, processing the control characteristics using a neural network (15) and fuzzy logic (16) to derive a control signal, and controlling the controlled object (2) on the basis of the control signal;
   characterized in that:

   the controlled object (2) is subject to a load (1); and
   the plurality of control characteristics correspond to the type of load and are derived by sampling the form of the output from a single sensor (4 or 5), which sensor (4 or 5) senses a single property; and
   the neural network (15) derives at least one basic control pattern from the control characteristics, and the fuzzy logic (16) derives the control signal from that basic control pattern.

2. A method according to claim 1, wherein the fuzzy logic (16) derives the control signal from the basic control pattern on the basis of at least one of the plurality of control characteristics.

3. A method according to claim 1, wherein fuzzy logic is applied separately to each of the control characteristics, to derive a plurality of fuzzy signals, and the neural network (15) processes the fuzzy signals to derive the control signal.

4. A method according to claim 1 wherein the fuzzy logic (16) derives the control signal from the basic control pattern making use of at least one further control characteristic (7).

5. A method according to claim 4, wherein at least one further control characteristic is generated by a further sensor (4).

6. A method according to any one of the preceding claims, wherein the fuzzy logic (16) receives control characteristics (7) which are not processed by the neural network (15).

7. A method according to any one of the preceding claims, wherein the neural network (15) derives the basic control pattern only when one of the control characteristics does not have at least one predetermined value, and at least one fixed control pattern is generated when that at least one of the control characteristics has the predetermined value, which at least one fixed control pattern is used by the fuzzy logic (16) to derive the control signal.

8. A method according to claim 7, wherein the at least one predetermined value corresponds to a predetermined range of the or a property used to derive the control characteristics.

9. A method according to any one of the preceding claims, wherein the controlled object is a vacuum cleaner.

10. A method according to claim 9, wherein the or a property used to derive the control characteristics corresponds to pressure measurement (4) within a part of the vacuum cleaner, and the input to a motor of the vacuum cleaner is controlled on the basis of the control signal.

11. A method according to claim 9, wherein the or a property used to derive the control characteristics corresponds to a measurement of the current of a motor (25) of the vacuum cleaner, and the motor (25) is controlled on the basis of the control signal.

12. A method according to claim 10 or claim 11, wherein one the control characteristics is expressed by $t_1/(t_1 + t_2)$, where $t_1$ is the time for which the measurement exceeds the average value thereof and $t_2$ is the time for which the measurement is less than the average value thereof.

13. A method according to any one of claims 10 to 12, wherein one of the control characteristics is expressed by $(t_1 - t_2)$, where $t_1$ is the time for which the measurement exceeds the average value thereof and $t_2$ is the time for which the measurement is less than the average value thereof.

14. A method according to any one of claims 10 to 13, wherein one of the control characteristics is expressed by $(t_1 + t_2)$, where $t_1$ is the time for which the measurement exceeds the average value thereof and $t_2$ is the time for which the measurement is less than the average value thereof.

15. A method according to any one of claims 1 to 8, wherein the controlled object is a washing machine.

16. A control system for controlling a controlled object (2), comprising means (8) for generating a plurality of control characteristics, and a neural network (15) and fuzzy logic system (16) for processing the control characteristics to derive a control signal for controlling the controlled object (2);
    characterized in that:

    the controlled object is subject to a load (1);
    the plurality of control characteristics correspond to the type of load;
    a single sensor (4 or 5), for sensing a single property of the controlled object (2), is provided;
    and the means (8) for generating the control characteristics is arranged to generate these characteristics by sampling the form of the output of the single sensor (4 or 5), the neural network (15) is arranged to derive at least one basic control pattern from the control characteristics, and the fuzzy logic (16) is arranged to derive the control signal from that basic control pattern.

17. A control system according to claim 16, having a further sensor (4) for deriving at least one further control characteristic the at least one further characteristic being applied to the fuzzy logic system (16) but not to the neural network (15).

18. A control system according to claim 16 or claim 17, wherein the fuzzy logic system (16) is arranged to receive control characteristics which are not receivable by the neural network.

19. A control system according to any one of claims 16 to 18, further including means (50) for generating a fixed control pattern when one of the control characteristics has a predetermined value, the fuzzy logic system (16) being arranged to modify the fixed control pattern to derive the control value, and the neural network (15) is arranged to derive the basic control pattern only when the said control characteristics does not have the predetermined value.

20. A vacuum cleaner having a control system according to any one of claims 16 to 19.

21. A vacuum cleaner according to claim 20, wherein the means for generating the characteristics is a pressure sensor (4).

22. A vacuum cleaner according to claim 20, wherein the means for generating the characteristics is a motor current sensor (5).

23. A washing machine having a control system according to any one of claims 16 to 19.

**Patentansprüche**

1. Verfahren zum Steuern eines gesteuerten Objekts (2) mit den Verfahrensschritten
   Erzeugen (8) einer Vielzahl von Steuerkenngrößen, Verarbeiten der Steuerkenngrößen mittels eines neuronalen Netzwerkes (15) und Fuzzylogik (16), um ein Steuersignal abzuleiten, und Steuern des gesteuerten Objekts (2) auf der Grundlage des Steuersignals;
   dadurch **gekennzeichnet,** daß

   das gesteuerte Objekt (2) einer Belastung (1) ausgesetzt ist; und
   die Vielzahl von Steuerkenngrößen der Belastungsart entsprechen und durch Aufnehmen der Form der Ausgabe eines einzelnen Sensors (4 oder 5) abgeleitet werden, wobei der Sensor (4 oder 5) eine einzelne Eigenschaft abtastet; und
   das neuronale Netzwerk (15) wenigstens ein Basissteuermuster aus den Steuerkenngrößen ableitet und die Fuzzylogik (16) das Steuersignal aus dem Basissteuermuster ableitet.

2. Verfahren nach Anspruch 1, wobei die Fuzzylogik (16) das Steuersignal aus dem Basissteuermuster auf der Grundlage wenigstens einer Steuergröße aus der Vielzahl von Steuerkenngrößen ableitet.

3. Verfahren nach Anspruch 1, wobei die Fuzzylogik getrennt an jede Steuerkenngröße angelegt wird, um eine Vielzahl von Fuzzysignalen abzuleiten, und das neuronale Netzwerk (15) die Fuzzysignale verarbeitet, um das Steuersignal abzuleiten.

4. Verfahren nach Anspruch 1, wobei die Fuzzylogik (16) das Steuersignal aus dem Basissteuermuster mittels wenigstens einer weiteren Steuerkenngröße ableitet.

5. Verfahren nach Anspruch 4, wobei wenigstens eine weitere Steuerkenngröße durch einen weiteren Sensor (4) erzeugt wird.

6. Verfahren nach einem der vorstehenden Ansprüche, wobei die Fuzzylogik (16) Steuerkenngrößen (7) erhält, die nicht durch das neuronale Netzwerk (15) verarbeitet sind.

7. Verfahren nach einem der vorstehenden Ansprüche, wobei das neuronale Netzwerk (15) das Basissteuermuster nur dann ableitet, wenn eine der Steuerkenngrößen nicht wenigstens einen vorbestimmten Wert besitzt, und wobei wenigstens ein festgelegtes Steuermuster erzeugt wird, wenn wenigstens eine der Steuerkenngrößen den vorbestimmten Wert besitzt, wobei das wenigstens eine festgelegte Steuermuster durch die Fuzzylogik (16) zum Ableiten des Steuersignals verwendet wird.

8. Verfahren nach Anspruch 7, wobei der wenigstens eine vorbestimmte Wert einem vorbestimmten Bereich der Steuerkenngrößen oder einer Eigenschaft, die zum Ableiten der Steuerkenngrößen verwendet wird, entspricht.

9. Verfahren nach einem der vorstehenden Ansprüche, wobei das gesteuerte Objekt ein Vakuumreinigungsgerät ist.

10. Verfahren nach Anspruch 9, wobei die Steuerkenngröße oder eine Eigenschaft, die zum Ableiten der Steuerkenngröße verwendet wird, einer Druckmessung (4) innerhalb eines Teils des Vakuumreinigungsgerätes entsprechen und die Eingabe für einen Motor des Vakuumreinigungsgerätes auf der Grundlage des Steuersignals gesteuert wird.

11. Verfahren nach Anspruch 9, wobei die Steuerkenngrößen oder eine Eigenschaft, die zum Ableiten der Steuerkenngrößen verwendet wird, einer Messung des Stroms des Motors (25) des Vakuumreinigungsgerätes entsprechen, und der Motor (25) auf der Grundlage des Steuersignals gesteuert wird.

12. Verfahren nach Anspruch 10 oder 11, wobei eine der Steuerkenngrößen durch $t_1/(t_1 + t_2)$ ausgedrückt wird, wobei $t_1$ der Zeit entspricht, für die die Messung ihren Durchschnittswert überschreitet und, $t_2$ der Zeit entspricht, für die die Messung unterhalb ihres Durchschnittswertes liegt.

13. Verfahren nach einem der Ansprüche 10 bis 12, wobei eine der Steuerkenngrößen durch $(t_1 - t_2)$ ausgedrückt wird, wobei $t_1$ der Zeit entspricht, für die die Messung ihren Durchschnittswert überschreitet, und $t_2$ der Zeit entspricht, für die die Messung unterhalb ihres Durchschnittswertes liegt.

**14.** Verfahren nach einem der Ansprüche 10 bis 13, wobei eine der Steuerkenngrößen durch $(t_1 + t_2)$ ausgedrückt wird, wobei $t_1$ der Zeit entspricht, für die die Messung ihren Durchschnittswert überschreitet, und $t_2$ der Zeit entspricht, für die die Messung unterhalb ihres Durchschnittswertes liegt.

**15.** Verfahren nach einem der Ansprüche 1 bis 8, wobei das gesteuerte Objekt eine Waschmaschine ist.

**16.** Steuersystem zum Steuern eines gesteuerten Objekts (2) mit einer Einrichtung (8) zum Erzeugen einer Vielzahl von Steuerkenngrößen, und einem neuronalen Netzwerk (15) und einem Fuzzylogiksystem (18) zum Verarbeiten der Steuerkenngrößen, um ein Steuersignal zum Steuern des gesteuerten Objekts (2) abzuleiten;
dadurch **gekennzeichnet,** daß das gesteuerte Objekt einer Belastung (1) ausgesetzt ist;

die Vielzahl von Steuerkenngrößen der Belastungsart entsprechen;
ein einzelner Sensor (4 oder 5) zum Abtasten einer einzelnen Eigenschaft des gesteuerten Objekts (2) vorgesehen ist; und
die Einrichtung (8) zum Erzeugen der Steuerkenngrößen so ausgelegt ist, daß sie diese Steuerkenngrößen durch Aufnehmen der Form der Ausgabe des einzelnen Sensors (4 oder 5) erzeugt, das neuronale Netzwerk (15) zum Ableiten wenigstens eines Basissteuermusters aus den Steuerkenngrößen ausgelegt ist, und die Fuzzylogik (16) zum Ableiten des Steuersignals aus dem Basissteuermuster ausgelegt ist.

**17.** Steuersystem nach Anspruch 16 mit einem weiteren Sensor (4) zum Ableiten wenigstens einer weiteren Steuerkenngröße, die an das Fuzzylogiksystem (16), jedoch nicht an das neuronale Netzwerk (17) angelegt wird.

**18.** Steuersystem nach Anspruch 16 oder 17, wobei das Fuzzylogiksystem (16) zum Aufnehmen von Steuerkenngrößen, die nicht durch das neuronale Netzwerk empfangen werden können, ausgelegt ist.

**19.** Steuersystem nach einem der Ansprüche 16 bis 18, weiter aufweisend eine Einrichtung (50) zum Erzeugen eines festgelegten Steuermusters, wenn eine der Steuerkenngrößen einen vorbestimmten Wert besitzt, wobei das Fuzzylogiksystem (16) zum Modifizieren des festgelegten Steuermusters ausgelegt ist, um den Steuerwert abzuleiten, und das neuronale Netzwerk (15) ausgelegt ist, das Basissteuermuster nur dann, wenn die Steuerkenngröße nicht den vorbestimmten Wert besitzt, abzuleiten.

**20.** Vakuumreinigungsgerät mit einem Steuersystem nach einem der Ansprüche 16 bis 19.

**21.** Vakuumreinigungsgerät nach Anspruch 20, wobei die Einrichtung zum Erzeugen der Kenngrößen ein Drucksensor (4) ist.

**22.** Vakuumreinigungsgerät nach Anspruch 20, wobei die Einrichtung zum Erzeugen der Kenngrößen ein Motorstrom-Sensor (5) ist.

**23.** Waschmaschine mit einem Steuersystem nach einem der Ansprüche 16 bis 19.

**Revendications**

**1.** Procédé pour contrôler un objet à contrôler (2), comprenant produire (8) un certain nombre de caractéristiques de commande, traiter les caractéristiques de commande en utilisant un réseau de neurones (15) et une logique floue (16) pour dériver un signal de commande, et contrôler l'objet à contrôler (2) sur la base du signal de commande; caractérisé en ce que :

l'objet à contrôler (2) est soumis à une charge (1); et

la pluralité de caractéristiques de commande correspondent au type de charge et sont dérivées en échantillonnant la forme de la sortie d'un détecteur unique (4 ou 5), lequel détecteur (4 ou 5) détecte une propriété unique; et

le réseau de neurones (15) dérive au moins un motif de commande de base à partir des caractéristiques de commande, et la logique floue (16) dérive le signal de commande de ce motif de commande de base.

2. Procédé selon la revendication 1, dans lequel la logique floue (16) dérive le signal de commande du motif de commande de base sur la base d'au moins l'une de la pluralité de caractéristiques de commande.

3. Procédé selon la revendication 1, dans lequel la logique floue est appliquée séparément à chacune des caractéristiques de commande, pour dériver un certain nombre de signaux de logique floue, et le réseau de neurones (15) traite les signaux de logique floue pour dériver le signal de commande.

4. Procédé selon la revendication 1 dans lequel la logique floue (16) dérive le signal de commande du motif de commande de base en effectuant une utilisation d'au moins une autre caractéristique de commande (7).

5. Procédé selon la revendication 4, dans lequel au moins une autre caractéristique de commande est produite par un autre détecteur (4).

6. Procédé selon l'une quelconque des revendications précédentes, dans lequel la logique floue (16) reçoit les caractéristiques de commande (7) qui ne sont pas traitées par le réseau de neurones (15).

7. Procédé selon l'une quelconque des revendications précédentes, dans lequel le réseau de neurones (15) dérive le motif de commande de base seulement lorsque l'une des caractéristiques de commande n'a pas au moins une valeur prédéterminée, et au moins un motif de commande fixé est produit lorsque c'est au moins une des caractéristiques de commande qui à la valeur prédéterminée, lequel au moins motif de commande fixé est utilisé par la logique floue (16) pour dériver le signal de commande.

8. Procédé selon la revendication 7, dans lequel la au moins une valeur prédéterminée correspond à une gamme prédéterminée de la ou d'une propriété utilisée pour dériver les caractéristiques de commande.

9. Procédé selon l'une quelconque des revendications précédentes, dans lequel l'objet à contrôler est un nettoyeur sous vide.

10. Procédé selon la revendication 9, dans lequel la propriété ou une propriété utilisée pour dériver les caractéristiques de commande correspond à une mesure de pression (4) dans une partie du nettoyeur sous vide et l'entrée à un moteur du nettoyeur sous vide est contrôlée sur la base du signal de commande.

11. Procédé selon la revendication 9, dans lequel la propriété ou une propriété utilisée pour dériver les caractéristiques de commande correspond à une mesure du courant d'un moteur (25) du nettoyeur sous vide et le moteur (25) est commandé sur la base du signal de commande.

12. Procédé selon la revendication 10 ou la revendication 11, dans lequel l'une des caractéristiques de commande est exprimée par $t_1/(t_1 + t_2)$, où $t_1$ est la période pendant laquelle la mesure excède la valeur moyenne de celle-ci et $t_2$ est la période pendant laquelle la mesure est inférieure à la valeur moyenne de celle-ci.

13. Procédé selon l'une quelconque des revendications 10 à 12, dans lequel l'une des caractéristiques de commande est exprimée par $(t_1 - t_2)$, où $t_1$ est la période pendant laquelle la mesure excède la valeur moyenne de celle-ci et $t_2$ est la période pendant laquelle la mesure est inférieure à la valeur moyenne de celle-ci.

14. Procédé selon l'une quelconque des revendications 10 à 13, dans lequel l'une des caractéristiques de commande est exprimée par $(t_1 + t_2)$, où $t_1$ est la période pendant laquelle la mesure excède la valeur moyenne de celle-ci et $t_2$ est la période pendant laquelle la mesure est inférieure à la valeur moyenne de celle-ci.

15. Procédé selon l'une quelconque des revendications 1 à 8, dans lequel l'objet à commander est une machine à laver.

16. Système de commande pour commander un objet à commander (2), comprenant un moyen (8) pour produire un certain nombre de caractéristiques de commande et un réseau de neurones (15) et un système de logique floue (16) pour traiter les caractéristiques de commande pour dériver un signal de commande pour commander l'objet à commander (2);

caractérisé en ce que :

l'objet à commander est soumis à une charge (1);

la pluralité des caractéristiques de commande correspondent au type de charge;

un détecteur unique (4 ou 5), pour détecter une propriété unique de l'objet à commander (2), est prévu;

et le moyen (8) pour produire les caractéristiques de commande est agencé pour produire ces caractéristiques en échantillonnant la forme de la sortie du détecteur unique (4 ou 5), le réseau de neurones (15) est agencé pour dériver au moins un motif de commande de base à partir des caractéristiques de commande et la logique floue (16) est agencée pour dériver le signal de commande de ce motif de commande de base.

17. Système de commande selon la revendication 16, ayant un autre détecteur (4) pour dériver au moins une autre caractéristique de commande, la au moins autre caractéristique étant appliquée au système de logique floue (16) mais pas au réseau de neurones (15).

18. Système de commande selon la revendication 16 ou la revendication 17, dans lequel le système de logique floue (16) est agencé pour recevoir des caractéristiques de commande qui ne peuvent pas être reçues par le réseau de neurones.

19. Système de commande selon l'une quelconque des revendications 16 à 18, comprenant de plus un moyen (50) pour produire un motif de commande fixé lorsque l'une des caractéristiques de commande a une valeur prédéterminée, le système de logique floue (16) étant agencé pour modifier le motif de commande fixé pour dériver la valeur de commande et le réseau de neurones (15) est agencé pour dériver le motif de commande de base et seulement lorsque lesdites caractéristiques de commande n'ont pas la valeur prédéterminée.

20. Nettoyeur sous vide ayant un système de commande selon l'une quelconque des revendications 16 à 19.

21. Nettoyeur sous vide selon la revendication 20, dans lequel le moyen pour produire les caractéristiques est un capteur de pression (4).

22. Nettoyeur sous vide selon la revendication 20, dans lequel le moyen pour produire les caractéristiques est un capteur (5) de courant de moteur.

23. Machine à laver ayant le système de commande selon l'une quelconque des revendications 16 à 19.

FIG.1

Load object — 1

Object to be controlled — 2

Motor — 3

Sensor — 4

10 — Control command generator

9 — Load object decision unit

7 — Load condition detector

8 — Characteristic amount sampling unit

Optimum controlled variable determining mechanism — 6

EP 0 527 567 B1

FIG.2

EP 0 527 567 B1

*FIG. 2 contd.*

Static pressure detecting circuit 11

Zero cross detecting circuit 20

EP 0 527 567 B1

FIG.3

EP 0 527 567 B1

FIG.4

FIG.5

## FIG.6(a)

'Floor'

Static pressure

A1

Cross point   Average

## FIG.6(b)

'Tatami mat'

Static pressure

A2

$\Delta H$

Average

## FIG.6(c)

'Carpet'

Static pressure

A3

$t_1$   $t'_2$

Average

# FIG. 7(a)

# FIG. 7(b)

# FIG. 7(c)

# FIG.8

$x_1$ — w1 — 45

$x_2$ — w2 — 46  47

$x_3$ — w3

$\Sigma$  y  z/y

$z_1$

$z_1$

$z_1$

# FIG.9

Rule 1 : If $x_1$ is $A_{11}$ and $x_2$ is $A_{12}$ then  y  is  $B_1$
Rule 2 : If $x_1$ is $A_{21}$ and $x_2$ is $A_{22}$ then  y  is  $B_2$

$A_{11}$  $x_1$  $A_{12}$  $x_2$  $B_1$  y

$A_{21}$  $x_1$  $A_{22}$  $x_2$  $B_2$  y

Input $x_1$   Input $x_2$

Center of gravity

## FIG.10

| Item | | Static pressure variation width H | | | | |
|---|---|---|---|---|---|---|
| | | Small | Slightly small | Standard | Slightly large | Large |
| Operating air volume Q | Small | No change | Slightly large | Slightly large | Large | Large |
| | Slightly small | Slightly small | No change | Slightly large | Slightly large | Large |
| | Standard | Small | Slightly small | No change | Slightly large | Large |
| | Slightly large | Small | Slightly small | Slightly small | No change | Large |
| | Large | Small | Small | Slightly small | Slightly small | No change |

EP 0 527 567 B1

## FIG.11(a) Operating air volume Q

## FIG.11(b) Static pressure variation width

## FIG.11(c) Output

# FIG. 12

# FIG.12 contd

'Carpet'

'Tatami mat'

'Floor'

Static pressure H

Air volume Q

$f(\Delta\theta)$
(Variable by fuzzy operation)

15A

15B

15C

17

$f(\theta)$

$f(\Delta\theta)$

Triac phase time determination

(FLS1) $\theta_1$

(FLS2) $\theta_2$

18

# FIG . 13

5V

R2

R3

48

PS

21

17s

20

# FIG . 18

Static pressure

Static pressure

0

B1

B2

Average

Time

t

FIG.14(a)

FIG.14(b)

FIG.14(c)

FIG.14(d)

FIG.15

EP 0 527 567 B1

FIG.16(a) Number of crosses

FIG.16(b) Operating time difference

FIG.16(c) Distribution

FIG.16(d) Static variation width

# FIG. 17

# FIG. 17 contd

# FIG.19

# FIG.19 contd

FIG.20

EP 0 527 567 B1

## FIG.21

Phase control angle

Neural calculator (15)

Suction characteristic determiner (17)

Triac phase time determiner (18)

Firing signal processor (19)

→ $\theta_1$

→ $\theta_2$

Fuzzy calculator (16)

Characteristic amount sampling of floor surface of neural use (8, 8A)

Characteristic amount sampling of floor surface for fuzzy use (8B)

Load condition detector (7) /H/

Zero-cross detection processor (28)

10

9

EP 0 527 567 B1

# FIG. 21contd

Current detecting circuit

12

Pressure detecting circuit

11

Zero-cross detecting circuit

20

6

13

13

R    C

R    C

EP 0 527 567 B1

FIG.22

## FIG. 23(a)

## FIG. 23(b)

FIG. 24 (a)

Power brush motor current A1 — t 'Floor'

Average value

FIG. 24 (b)

Power brush motor current A2 — t 'Tatami mat'

Average value

FIG. 24 (c)

Power brush motor current A3 — t 'Carpet'

Average value

EP 0 527 567 B1

# FIG . 25(a)

'Floor'

Powered brush motor current

0

Average value

# FIG .25(b)

'Tatami mat'

Powered brush motor current

0

t   ΔPbi

Average  value

# FIG.25(c)

'Carpet'

Powered brush motor current

0

t

Average value

t₁   t₂

## FIG. 26(a) Number of crosses CR

## FIG. 26(b) Operating time difference TD

## FIG. 26(c) Operating time ratio TR

## FIG. 26(d) Operating time TP

# FIG . 27(a) Distributed SM

# FIG . 27(b) Current variation width Δpbi

# FIG . 36

# FIG . 28

# FIG. 28 contd

FIG. 29

EP 0 527 567 B1

FIG.30

EP 0 527 567 B1

FIG. 31

FIG .31 contd

EP 0 527 567 B1

# FIG. 32

# FIG . 32 contd

## FIG. 33

# FIG. 34

# FIG.34 contd

17

H Constant

'Floor'

'Tatami mat'

'Carpet'

Pressure H

Q constant

Air volume Q

Triac phase
time determination

(FLS1) θ₁

(FLS2) θ₂

18

FIG.35

# FIG.35 contd

17

H Constant

'Floor'

'Tatami mat'

'Carpet'

Pressure H

Q constant

Air volume Q

Triac phase time determination

(FLS1) → $\theta_1$

(FLS2) → $\theta_2$

18

# FIG.37

Characteristic amount sampling — 8

NW
NS
YG

Input layer
Intermediate layer
Output layer

— 15

Neuro
Fuzzy constant
Pulse
Time

— 76

Operation command $t'_1, t'_2$

Fuzzy calculator — 16

Load condition detector

P

— 7

EP 0 527 567 B1

59